# EUROPEAN PATENT APPLICATION

(11) **EP 4 489 163 A1**
(43) Date of publication of application: **08.01.2025**
(21) Application number: 24186030.3
(22) Date of filing: 02.07.2024
(51) Int. Cl.: H01M 10/04, H01M 50/211

(54) **ENERGY STORAGE APPARATUS**

(30) Priority: 03.07.2023 CN 202310797305
(71) Applicant: REPT BATTERO Energy Co., Ltd., 325000 Wenzhou Zhejiang (CN); Shanghai Ruipu Energy Co., Ltd., Shanghai 201206 (CN)
(72) Inventor: Cao, Hui, WENZHOU, ZHEJIANG, 325000 (CN); Hou, Min, PUDONG NEW DISTRICT, SHANGHAI, 201206 (CN); Yao, Yi, PUDONG NEW DISTRICT, SHANGHAI, 201206 (CN); Liu, Chan, PUDONG NEW DISTRICT, SHANGHAI, 201206 (CN); Liu, Wei, PUDONG NEW DISTRICT, SHANGHAI, 201206 (CN); Cao, Kai, WENZHOU, ZHEJIANG, 325000 (CN)
(74) Representative: Gulde & Partner

(57) **Abstract**

An an energy storage apparatus is provided. the energy storage apparatus includes: a plurality of single batteries and a bipolar plate, each of the plurality of single batteries including a battery cell, the battery cell including a first electrode and a second electrode with opposite polarities and being insulated from each other; the bipolar plate is arranged between two adjacent single batteries, the first electrode or the second electrode of one of the adjacent single batteries forms an electrical connection with the bipolar plate through contacting, and the second electrode or the first electrode of the other of the adjacent single batteries forms an electrical connection with the bipolar plate through contacting; by arranging the bipolar plate between adjacent single batteries, the electrical connection between adjacent single batteries can be achieved, the weight and volume can be reduced, and the specific characteristics of the energy storage apparatus can be improved.

## Description

### CROSS-REFERENCE TO RELATED APPLICATION

The present application claims the priority to Chinese Patent Application No. 202310797305.9, filed on July 3, 2023, the entire disclosure of which is incorporated herein by reference as part of the present application.

### TECHNICAL FIELD

Embodiments of the present disclosure relate to an energy storage apparatus.

### BACKGROUND

With the rapid development of battery technology, the application of batteries has gradually entered all walks of life. Typically, each battery includes a positive electrode, a negative electrode, a separator, an electrolyte, a housing, a battery cover, terminal posts, and other structures. The output voltage of a single battery is usually low, and in practice it is often necessary to increase the output voltage by connecting a plurality of batteries in series. In a battery pack, the terminal posts of each battery include a positive terminal post and a negative terminal post, and the electrical connection between different batteries can be realized by using a bus bar to connect the positive and negative terminal posts between different batteries, so as to achieve the effect of series or parallel connection. However, through this connection manner, the weight and volume of the battery pack may be increased, the charging voltage of the battery pack may be increased, the discharging voltage of the battery pack may be reduced, and the heat generation may be increased, thereby reducing the energy efficiency and safety performance of the battery. Therefore, designing a scheme that can achieve a good electrical connection between batteries and optimize the overall performance of the battery pack has become a hot research spot in the battery field that needs to be broken through.

### SUMMARY

At least one embodiment of the present disclosure provides an energy storage apparatus, by arranging the bipolar plate between adjacent single batteries, the electrical connection between adjacent single batteries can be achieved, the weight and volume can be reduced, and the specific characteristics of the energy storage apparatus can be improved.

Embodiments of the present disclosure provides an energy storage apparatus, including: a plurality of single batteries, each of the plurality of single batteries including a battery cell, the battery cell including a first electrode and a second electrode with opposite polarities and being insulated from each other; a bipolar plate arranged between two adjacent single batteries, the first electrode or the second electrode of one of the adjacent single batteries forms an electrical connection with the bipolar plate through contacting, and the second electrode or the first electrode of the other of the adjacent single batteries forms an electrical connection with the bipolar plate through contacting; a housing assembly, the housing assembly including a plurality of housing components corresponding to the plurality of single batteries, one of the first electrode and the second electrode includes a positive current collector and a positive electrode material, and the other of the first electrode and the second electrode includes a negative current collector and a negative electrode material; the positive current collector includes a first contacting region, and the negative current collector includes a second contacting region, in a same one of the plurality of single batteries, the first contacting region is configured to form an electrical connection with one of the housing component and the bipolar plate corresponding to the same single battery through contacting, the second contacting region is configured to form an electrical connection with the other of the bipolar plate and the housing component corresponding to the same single battery through contacting; or, in the same single battery, the first contacting region and the second contacting region are configured to form electrical connection with bipolar plates located on both sides of the same single battery respectively through contacting, and neither the first contacting region nor the second contacting region is provided with the positive electrode material or the negative electrode material.

For example, according to the energy storage apparatus provided by at least one embodiment of the present disclosure, the bipolar plate is connected with the housing components corresponding to the two adjacent single batteries to be insulated from each other and sealed therebetween so as to form receiving chambers; the battery cell is located in each of the receiving chambers, and the bipolar plate acts as a partition plate of an ion path between the receiving chambers corresponding to the two adjacent single batteries.

For example, according to the energy storage apparatus provided by at least one embodiment of the present disclosure, a contacting area between the first contacting region and the housing component corresponding to the single battery or a contacting area between the first contacting region and the bipolar plate corresponding to the single battery is greater than or equal to 9mm²; and/or a contacting area between the second contacting region and the housing component corresponding to the single battery or a contacting area between the second contacting region and the bipolar plate corresponding to the single battery is greater than or equal to 9mm².

For example, according to the energy storage apparatus provided by at least one embodiment of the present disclosure, in the same single battery, the first contacting region is a surface of the positive current collector at a side close to the housing component or the bipolar plate, and the second contacting region is a surface of the negative current collector at a side close to the bipolar plate or the housing side; or, in the same single battery, the first contacting region is a surface of the positive current collector close to the bipolar plate on one side of the same single battery, and the second contacting region is a surface of the negative current collector close to the bipolar plate on the other side of the same single battery.

For example, according to the energy storage apparatus provided by at least one embodiment of the present disclosure, the positive current collector further includes a first coating region, and the positive electrode material is coated in the first coating region; the negative current collector further includes a second coating region, and the negative electrode material is coated in the second coating region.

For example, according to the energy storage apparatus provided by at least one embodiment of the present disclosure, at least a part of the first coating region is located on a surface of the positive current collector at a side opposite to the first contacting region, and/or at least a part of the second coating region is located on a surface of the negative current collector at a side opposite to the second contacting region.

For example, according to the energy storage apparatus provided by at least one embodiment of the present disclosure, the positive current collector further includes a plurality of first connecting regions, the negative current collector further includes a plurality of second connecting regions, in the same single battery, the plurality of first connecting regions of the positive current collector are electrically connected, the plurality of second connecting regions of the negative current collector are electrically connected.

For example, according to the energy storage apparatus provided by at least one embodiment of the present disclosure, the plurality of single batteries include two end single batteries, in a same one of the two end single batteries, the first electrode and the second electrode of the end single battery are configured to form electrical connection with the housing component and the bipolar plate corresponding to the end single battery through contacting, respectively; and the housing components corresponding to the two end single batteries act as power supply output electrodes of the energy storage apparatus, respectively.

For example, according to the energy storage apparatus provided by at least one embodiment of the present disclosure, one of the first electrode and the second electrode in one end single battery of the two end single batteries is configured to form an electrical connection with the housing component corresponding to the end single battery through contacting; the other of the second electrode and the first electrode in the other end single battery of the two end single batteries is configured to form an electrical connection with the housing component corresponding to the other end single battery through contacting.

For example, according to the energy storage apparatus provided by at least one embodiment of the present disclosure, the positive current collector further includes at least one positive electrode tab group and the negative current collector further includes at least one negative electrode tab group, each of the at least one positive electrode tab group includes at least one positive electrode tab and each of the at least one negative electrode tab group includes at least one negative electrode tab; in the same single battery, at least one positive electrode tab of the positive electrode tab group is electrically connected with one of the housing component and the bipolar plate that is electrically connected with and corresponds to the first contacting region, and at least one negative electrode tab of the negative electrode tab group is electrically connected with the other one of the bipolar plate and the housing component that is electrically connected with and corresponds to the second contacting region; or, at least one positive electrode tab of the positive electrode tab group is electrically connected with the bipolar plate that is electrically connected with and corresponds to the first contacting region, and at least one negative electrode tab of the negative electrode tab group is electrically connected with the bipolar plate that is electrically connected with and corresponds to the second contacting region.

For example, according to the energy storage apparatus provided by at least one embodiment of the present disclosure, the positive current collector further includes at least one positive electrode tab group and the negative current collector further includes at least one negative electrode tab group, each of the at least one positive electrode tab group includes at least one positive electrode tab and each of the at least one negative electrode tab group includes at least one negative electrode tab; in the same single battery, at least one positive electrode tab of the positive electrode tab group is electrically connected with one of the housing component and the bipolar plate corresponding to and electrically connected with the first contacting region, and at least one negative electrode tab of the negative electrode tab group is electrically connected with the other one of the bipolar plate and the housing component corresponding to and electrically connected with the second contacting region; or, at least one positive electrode tab of the positive electrode tab group is electrically connected with the bipolar plate corresponding to and electrically connected with the first contacting region, and at least one negative electrode tab of the negative electrode tab group is electrically connected with the bipolar plate corresponding to and electrically connected with the second contacting region, the first contacting region and the at least one positive electrode tab are connected at different positions of the housing component, respectively, or connected at different positions of the bipolar plate, respectively; the second contacting region and the at least one negative electrode tab are connected at different positions of the housing component, respectively, or connected at different positions of the bipolar plate, respectively.

For example, according to the energy storage apparatus provided by at least one embodiment of the present disclosure, a count of the positive electrode tab groups in the positive current collector and a count of the negative electrode tab groups in the negative current collector are both two.

For example, according to the energy storage apparatus provided by at least one embodiment of the present disclosure, the housing component corresponding to the end single battery is a conductor; in the same end single battery, the at least one positive electrode tab and the first contacting region are electrically connected with a side wall of the housing component corresponding to the end single battery, and the at least one negative electrode tab and the second contacting region are electrically connected with the bipolar plate corresponding to the end single battery; or the at least one negative electrode tab and the second contacting region are electrically connected with the side wall of the housing component corresponding to the end single battery, and the at least one positive electrode tab and the first contacting region are electrically connected with the bipolar plate corresponding to the end single battery.

For example, according to the energy storage apparatus provided by at least one embodiment of the present disclosure, the housing component corresponding to the end single battery includes a first main body portion, a first hole region in the first main body portion, and a first conductive portion arranged in the first hole region and connected with the first main body portion to be insulated from each other and sealed therebetween, one of the first electrode and the second electrode of the end single battery forms an electrical connection with the first conductive portion through contacting; the first main body portion is connected with the bipolar plate to be insulated from each other and sealed therebetween, and the other one of the first electrode and the second electrode of the end single battery forms an electrical connection with the bipolar plate through contacting.

For example, according to the energy storage apparatus provided by at least one embodiment of the present disclosure, the housing component corresponding to the end single battery further includes a second conductive portion, and at least one positive electrode tab or at least one negative electrode tab of the end single battery is electrically connected with the housing component through the second conductive portion; in the same end single battery, the second conductive portion and the first conductive portion are located on the side wall of the housing component corresponding to the end single battery.

For example, according to the energy storage apparatus provided by at least one embodiment of the present disclosure, the plurality of single batteries further include at least one intermediate single battery located between the two end single batteries, in a same one of the plurality of intermediate single batteries, the first electrode and the second electrode are configured to form electrical connection with the bipolar plates located on two sides of the intermediate single battery through contacting, respectively.

For example, according to the energy storage apparatus provided by at least one embodiment of the present disclosure, at least one bipolar plate includes a bipolar plate main body, a first conductive region, and a second conductive region, one of the first electrode and the second electrode of the single battery forms an electrical connection with the first conductive region through contacting, and one of the corresponding positive electrode tab and negative electrode tab in the single battery forms an electrical connection with the second conductive region through contacting; the other of the second electrode and the first electrode of another adjacent single battery forms an electrical connection with the first conductive region through contacting, and the other of the corresponding negative electrode tab and positive electrode tab in the another adjacent single battery forms an electrical connection with the second conductive region through contacting.

For example, according to the energy storage apparatus provided by at least one embodiment of the present disclosure, at least one bipolar plate includes a bipolar plate main body and a first conductive region, one of the first electrode and the second electrode of the single battery, and one of the corresponding positive electrode tab and the negative electrode tab form electrical connection with the first conductive region of the bipolar plate through contacting, respectively; the other of the second electrode and the first electrode of another adjacent single battery forms an electrical connection with the first conductive region through contacting, and the other of the corresponding negative electrode tab and the positive electrode tab in the another adjacent single battery forms an electrical connection with the first conductive region through contacting.

For example, according to the energy storage apparatus provided by at least one embodiment of the present disclosure, the bipolar plate includes an insulating substrate and a conductive layer on a surface located on at least one side in a thickness direction of the insulating substrate, the insulating substrate is provided with an internal conductor, the conductive layer is electrically connected with the internal conductor, so that adjacent single batteries form an electronic path through the conductive layer and the internal conductor in the thickness direction of the insulating substrate.

For example, according to the energy storage apparatus provided by at least one embodiment of the present disclosure, a material of the bipolar plate includes a conductive material, so that adjacent single batteries form an electronic path in a thickness direction of the bipolar plate.

For example, according to the energy storage apparatus provided by at least one embodiment of the present disclosure, the bipolar plate main body is connected with the first conductive region and the second conductive region to be insulated from each other and sealed therebetween, respectively.

For example, according to the energy storage apparatus provided by at least one embodiment of the present disclosure, the energy storage apparatus further includes an insulating structure, the insulating structure is arranged between the housing component and the bipolar plate corresponding to the single battery and between the housing components corresponding to the two adjacent single batteries, so as to realize electronic insulation between the housing component and the bipolar plate corresponding to the single battery, and realize electronic insulation between the housing components corresponding to the two adjacent single batteries.

For example, according to the energy storage apparatus provided by at least one embodiment of the present disclosure, the energy storage apparatus further includes a first electronic isolating component, the first electronic isolating component is located in the receiving chamber, and the first electronic isolating component is configured to insulate the first electrode of the single battery from the housing component or the bipolar plate electrically connected with the second electrode.

For example, according to the energy storage apparatus provided by at least one embodiment of the present disclosure, the energy storage apparatus further includes a second electronic isolating component, the second electronic isolating component is located in the receiving chamber, and the second electronic isolating component is configured to insulate the second electrode of the single battery from the housing component or the bipolar plate electrically connected with the first electrode.

For example, according to the energy storage apparatus provided by at least one embodiment of the present disclosure, the energy storage apparatus further includes a third electronic isolating component, the third electronic isolating component is located in the receiving chamber corresponding to the end single battery, and is configured to allow one of the first contacting region and the second contacting region electrically connected with the first conductive portion of the end single battery to be not in contact with the first main body portion and/or the second conductive portion.

For example, according to the energy storage apparatus provided by at least one embodiment of the present disclosure, the energy storage apparatus further includes a fourth electronic isolating component, the plurality of single batteries further include at least one intermediate single battery located between the two end single batteries, the fourth electronic isolating component is located in the receiving chamber corresponding to the intermediate single battery, and is configured to allow one of the first contacting region and the second contacting region electrically connected with the first conductive region of the intermediate single battery to be insulated from the bipolar plate main body and/or to be not in contact with the second conductive region.

For example, according to the energy storage apparatus provided by at least one embodiment of the present disclosure, the battery cell of the single battery further includes an electronic isolating film, the electronic isolating film is configured to achieve electronic insulation between the first electrode and the second electrode, and the first electrode, the electronic isolating film, and the second electrode are stacked to form a laminated battery cell; and/or the first electrode, the electronic isolating film, and the second electrode are wound to form a wound battery cell.

For example, according to the energy storage apparatus provided by at least one embodiment of the present disclosure, the battery cell of the single battery is the laminated battery cell, the electronic isolating film is of an integrated structure, and in the laminated battery cell, the electronic isolating film winds between the first electrode and the second electrode that are adjacent to each other; or, the electronic isolating film includes a plurality of electronic isolating sub-films, in the laminated battery cell, each of the plurality of the electronic isolating sub-films is located between the first electrode and the second electrode that are adjacent to each other; or, the electronic isolating film includes a plurality of electronic isolating sub-films and an integrated isolating sub-film, in the laminated battery cell, the laminated battery cell includes a first part of battery cell and a second part of battery cell, each of the plurality of the electronic isolating sub-films is located between the first electrode and the second electrode adjacent to each other in the first part of battery cell, the integrated isolating sub-film winds between the first electrode and the second electrode of the second part of battery cell.

For example, according to the energy storage apparatus provided by at least one embodiment of the present disclosure, the battery cell of the single battery is the wound battery cell, the electronic isolating film includes an integrated first electronic isolating film and an integrated second electronic isolating film, the first electronic isolating film, the second electrode, the second electronic isolating film, and the first electrode are stacked in sequence, and the first electronic isolating film and the second electronic isolating film wind between the first electrode and the second electrode that are adjacent to each other.

For example, according to the energy storage apparatus provided by at least one embodiment of the present disclosure, the single battery includes a plurality of battery cells which are connected in parallel.

### BRIEF DESCRIPTION OF DRAWINGS

In order to clearly illustrate the technical solution of the embodiments of the present disclosure, the drawings of the embodiments will be briefly described in the following. It is obvious that the described drawings are only related to some embodiments of the present disclosure and thus are not limitative of the present disclosure.
Fig. 1 is a structural diagram of an energy storage apparatus provided by at least one embodiment of the present disclosure.
Fig. 2 is a structural diagram of another energy storage apparatus provided by at least one embodiment of the present disclosure.
Fig. 3 is a structural diagram of a single battery in another energy storage apparatus provided by at least one embodiment of the present disclosure.
Fig. 4A is a schematic diagram of an end single battery and a bipolar plate of another energy storage apparatus provided by at least one embodiment of the present disclosure.
Fig. 4B is a schematic diagram of an end single battery and a bipolar plate of another energy storage apparatus provided by at least one embodiment of the present disclosure.
Fig. 5 is a structural diagram of another energy storage apparatus provided by at least one embodiment of the present disclosure.
Fig. 6 is a cross-sectional view of a wound battery cell in the energy storage apparatus provided by at least one embodiment of the present disclosure.
Fig. 7A to Fig. 13B are structural diagrams of electrode sheets in the energy storage apparatus provided by at least one embodiment of the present disclosure.

### DETAILED DESCRIPTION

For more clear understanding of the objectives, technical details and advantages of the embodiments of the present disclosure, the technical solutions of the embodiments will be described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiment(s), without any inventive work, which should be within the scope of the present disclosure.

Unless otherwise defined, all the technical and scientific terms used herein have the same meanings as commonly understood by one of ordinary skill in the art to which the present disclosure belongs. The terms "first," "second," etc., which are used in the present disclosure, are not intended to indicate any sequence, amount or importance, but distinguish various components. Also, the terms "comprise", "comprising", "include", "including", etc., are intended to specify that the elements or the objects stated before these terms encompass the elements or the objects and equivalents thereof listed after these terms, but do not preclude the other elements or objects.

The features of "vertical", "parallel" and "same" used in the embodiment of the present disclosure all include the features of "vertical", "parallel" and "same" in the strict sense, and the situations that "approximately vertical", "approximately parallel" and "approximately same" contain certain errors. Considering the measurement and the error related to the measurement of a specific quantity (that is, the limitation of the measurement system), those expressions are within the acceptable deviation range for a specific value determined by one of ordinary skilled in the field. The "center" in the embodiment of the present disclosure may include a strictly geometric center position and a roughly central position in a small area around the geometric center.

At present, all kinds of energy storage apparatuses have a wide range of applications in actual production and life. For example, the energy storage apparatus may include a battery. For example, the energy storage apparatus may include, but is not limited to, a lithium-ion battery, a sodium-ion battery, and a potassium-ion battery.

For example, in the battery, the positive electrode may include a positive current collector and a positive electrode material. For example, in the lithium-ion battery, the positive electrode material may include at least one of lithium manganate, lithium cobaltate, lithium iron phosphate, and lithium nickel cobalt manganate. For example, in the sodium-ion battery, the positive electrode material may include at least one of sodium iron nickel manganese oxide, prussian white (blue), and polyanionic sodium salts. For example, the positive current collector can be aluminum foil, but is not limited to this. For example, the negative electrode may include a negative current collector and a negative electrode material. For example, the negative electrode material may include at least one of graphite, silicon, silicon oxide, hard carbon, or lithium titanate. For example, the negative current collector may include copper foil, but is not limited to this. For example, between the positive electrode and the negative electrode, an insulating substance is usually arranged to insulate the positive electrode from the negative electrode. For example, a battery housing may include at least one of a steel housing, an aluminum housing, and a nickel-plated iron housing. For example, a terminal post may be provided on an end cover of the battery to achieve an electrical connection between the battery and an external conductor or an electrode of an adjacent battery in a battery pack. For example, the battery further includes a positive electrode tab and a negative electrode tab, the positive electrode tab and the negative electrode tab are located inside the housing of the battery, the positive electrode tab is configured to connect the positive electrode and positive terminal post of the battery, and the negative electrode tab is configured to connect the negative electrode and negative terminal post of the battery. For example, inside the housing of the battery, an electrolyte is further provided. For example, the electrolyte may include, but is not limited to, a carbonate solvent in which lithium hexafluorophosphate or sodium hexafluorophosphate is dissolved.

In research, the inventor of the present disclosure found that the output voltage of a single battery is usually low, and in practice it is often necessary to increase the output voltage by connecting a plurality of batteries in series. In a battery pack, each battery may include a positive terminal post and a negative terminal post, the positive terminal post is connected with the positive electrode tab of the battery, and the negative terminal post is connected with the negative electrode tab of the battery. The positive terminal post and the negative terminal post protrude from the housing of the battery, respectively. The electrical connection between different batteries can be realized by using a bus bar to connect the positive and negative terminal posts between different batteries, so as to achieve the effect of series or parallel connection. However, through this connection manner, the charging voltage of the battery pack may be increased, the discharging voltage of the battery pack may be reduced, and the heat generation may be increased, thereby reducing the energy efficiency and safety performance of the battery. At the same time, because the positive and negative terminal posts protrude from the battery housing, this external design method may increase the weight and volume of the entire battery pack, thereby reducing the specific characteristics of the entire battery pack.

Therefore, in view of the above problems, it is urgent to develop a solution that is conducive to the electrical connection of the batteries in the battery pack, so as to optimize the energy transmission characteristics of the battery pack, improve the fast charge and low temperature performance, make the battery pack safer and more reliable, and reduce the weight and volume of the entire battery pack.

The embodiment of the present disclosure provides an energy storage apparatus. The energy storage apparatus includes a plurality of single batteries and a bipolar plate, each of the plurality of single batteries includes a battery cell, the battery cell includes a first electrode and a second electrode with opposite polarity and being insulated from each other; at least one bipolar plate is arranged between two adjacent single batteries, the first electrode or the second electrode of one of the adjacent single batteries forms an electrical connection with the bipolar plate through contacting, and the second electrode or the first electrode of the other of the adjacent single batteries forms an electrical connection with the bipolar plate through contacting.

The embodiment of the present disclosure can realize the electrical connection between the adjacent single batteries by arranging the bipolar plate between the adjacent single batteries, the voltage drop of the battery charge and discharge can be reduced, the battery energy efficiency can be improved, the safety performance can be enhanced, the weight and volume of the single battery and the entire energy storage apparatus can be reduced, and the specific characteristics of the energy storage apparatus can be improved.

The energy storage apparatus is described below in combination with the attached figures and through some embodiments.

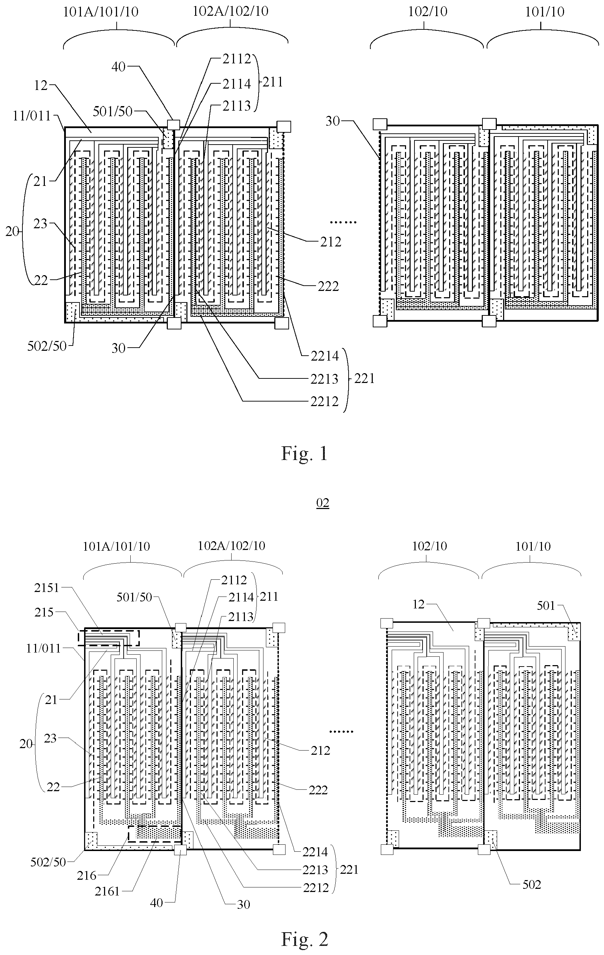

Fig. 1 is a structural diagram of an energy storage apparatus provided by at least one embodiment of the present disclosure.

Referring to Fig. 1, at least one embodiment of the present disclosure provides an energy storage apparatus 01. The energy storage apparatus 01 includes a housing assembly 011 and a plurality of single batteries 10. For example, the housing assembly 011 can be used as the external housing of the energy storage apparatus 01. The housing assembly 011 of the energy storage apparatus 01 includes a housing component 11 corresponding to each single battery 10. For example, each single battery 10 corresponds to its own housing component 11. For example, the structures of the housing components 11 corresponding to different single batteries 10 may be different, but are not limited to this.

Referring to Fig. 1, the single battery 10 includes a battery cell 20 which includes a first electrode 21 and a second electrode 22 with opposite polarity and being insulated from each other. In embodiments of the present disclosure, the single battery 10 further includes an electrolyte.

For example, referring to Fig. 1, the energy storage apparatus 01 may be a battery pack including a plurality of single batteries 10. For example, the energy storage apparatus 01 may include any one of the lithium-ion battery, the sodium-ion battery, and the potassium-ion battery. For example, the energy storage apparatus 01 may be a lithium battery pack, but is not limited to this.

Referring to Fig. 1, the energy storage apparatus 01 further includes a bipolar plate 30. The bipolar plate 30 may include a conductive material to achieve an electrical connection between two adjacent single batteries 10. For example, the bipolar plate 30 may include at least one of titanium, nickel, aluminum, copper, carbon fiber, graphene, and conductive carbon black, but is not limited to this. Therefore, the bipolar plate 30 has a good electrical conductivity, as well as a light weight.

Referring to Fig. 1, the bipolar plate 30 is located between two adjacent single batteries 10. The first electrode 21 or the second electrode 22 of one of the adjacent single batteries 10 is connected with the bipolar plate 30, and the second electrode 22 or the first electrode 21 of the other of the adjacent single batteries 10 is connected with another bipolar plate 30, but is not limited to this.

For example, referring to Fig. 1, in the battery cell 20, the first electrode 21 may be a positive electrode and the second electrode 22 may be a negative electrode; or, in the battery cell 20, the first electrode 21 may be the negative electrode and the second electrode 22 may be the positive electrode.

For example, referring to Fig. 1, two adjacent battery cells 20 are located on both sides of one bipolar plate 30, and one of the first electrode 21 and the second electrode 22 of each battery cell 20 is connected with the bipolar plate 30 to achieve an electrical connection. That is, the bipolar plate 30 can be used as an intermediate medium for electrical connection between two adjacent single batteries 10.

For example, referring to Fig. 1, in the energy storage apparatus 01, each bipolar plate 30 is sandwiched between the battery cells 20 of two adjacent single batteries 10, and is in contact with the battery cells 20 of the two adjacent single batteries 10, respectively, but is not limited to this.

For example, referring to Fig. 1, the bipolar plate 30 can be in the shape of a plate, and the battery cells 20 of two adjacent single batteries 10 are arranged immediately adjacent to each other, the bipolar plate 30 is arranged between the battery cells 20 of the two adjacent single batteries 10, and is in contact with the battery cells 20 of the two adjacent single batteries 10, respectively, which is conducive to achieving effective electrical connection between the two adjacent battery cells 20 and making the arrangement of the single batteries 10 more compact, and saving the internal space of the energy storage apparatus 01.

For example, in some embodiments, for one single battery 10, the single battery 10 may include a plurality of battery cells 20 which may be connected in parallel. For example, the plurality of battery cells 20 may be located in the housing component 11 corresponding to the single battery 10, the first electrodes 21 of the plurality of battery cells 20 are electrically connected with each other, and the second electrodes 22 of the plurality of battery cells 20 are electrically connected with each other.

For example, referring to Fig. 1, for the plurality of single batteries 10, the plurality of single batteries 10 may be connected in series by the bipolar plate 30 being located between two adjacent single batteries 10. At this point, polarities of the electrodes on both sides of the bipolar plate 30 are opposite. For example, in the case where the first electrode 21 of a single battery 10 is connected with the bipolar plate 30, the second electrode 22 of another single battery 10 adjacent to the single battery 10 is connected with the bipolar plate 30. Alternatively, in the case where the second electrode 22 of a single battery 10 is connected with the bipolar plate 30, the first electrode 21 of another single battery 10 adjacent to the single battery 10 is connected with the bipolar plate 30, but is not limited to this.

Therefore, referring to Fig. 1, adjacent single batteries 10 do not need to be electrically connected by providing structures such as the terminal post, but directly through the bipolar plate 30 arranged between the adjacent single batteries 10, which can simplify the design structure of the single battery 10, and make each single battery 10 lighter and have a smaller volume. At the same time, it can also avoid the problems of increasing the charging voltage of the energy storage apparatus 01, reducing the discharge voltage of the energy storage apparatus 01, and increasing the heat generation caused by the terminal post or other connecting elements, so as to effectively improve the energy efficiency of the single battery and enhance the safety performance.

In order to more clearly describe the embodiments of the present disclosure, the following embodiments are illustrated with reference to the case where the plurality of single batteries 10 are connected in series.

For example, referring to Fig. 1, one bipolar plate 30 is arranged between every two adjacent single batteries 10. For example, in the case where the single battery 10 is connected in series with the adjacent single battery 10 through the bipolar plate 30, every two adjacent single batteries 10 achieve an electrical connection through one corresponding bipolar plate 30. In this way, the size and the weight of the single battery 10 and the entire energy storage apparatus 01 can be further reduced, and the specific characteristics of the single battery 10 and the entire energy storage apparatus 01 can be improved.

For example, referring to Fig. 1, in the energy storage apparatus 01, the bipolar plate 30 is connected with the housing component 11 corresponding to the single battery 10 to be insulated from each other and sealed therebetween, thereby forming receiving chambers 12, respectively.

For example, referring to Fig. 1, the battery cell 20 of the single battery 10 is located in the receiving chamber 12, and the bipolar plate 30 acts as a partition plate of an ion path between the receiving chambers 12 corresponding to two adjacent single batteries 10.

For example, referring to Fig. 1, the receiving chamber 12 corresponding to each single battery 10 is an independent and sealed chamber. For example, each single battery 10 further includes an electrolyte, and the bipolar plate 30 acts as a partition plate between two adjacent single batteries 10, thereby preventing electrolytes located in different receiving chambers 12 from flowing to avoid short circuit between different single batteries 10, but is not limited to this. For example, in the case where the bipolar plate 30 acts as the partition plate between the receiving chambers 12 corresponding to the adjacent single batteries 10, each single battery 10 corresponds to its own independent receiving chamber 12, so that the risk of short circuit between different single batteries 10 can be reduced.

For example, the structures of two adjacent bipolar plates 30 may be the same. For example, the structures of the housing components 11 corresponding to different single batteries 10 may be different.

For example, referring to Fig. 1, in the same single battery 10, the first electrode 21 and the second electrode 22 are respectively configured to form electrical connection with the housing component 11 and the bipolar plate 30 corresponding to the single battery 10 through contacting. Alternatively, in the same single battery 10, the first electrode 21 and the second electrode 22 are respectively configured to form electrical connection through contacting with the bipolar plates 30 located on both sides of the single battery 10.

For example, referring to Fig. 1, in the arrangement direction of the plurality of single batteries 10 in the energy storage apparatus 01, in the case where only one side of a single battery 10 is provided with another single battery 10, the first electrode 21 and the second electrode 22 of the single battery 10 are respectively configured to form electrical connection with the housing component 11 and the bipolar plate 30 corresponding to the single battery 10 through contacting. That is to say, the first electrode 21 of the single battery 10 is configured to form an electrical connection with one of the housing component 11 and the bipolar plate 30 corresponding to the single battery 10 through contacting, and the second electrode 22 of the single battery 10 is configured to form an electrical connection with the other of the housing component 11 and the bipolar plate 30 corresponding to the single battery 10 through contacting. For example, in the case where each of the both sides of the single battery 10 is provided with a single battery 10, the first electrode 21 and the second electrode 22 of the single battery 10 are configured to form electrical connection with the bipolar plates 30 located on both sides of the single battery 10 respectively through contacting. That is, the first electrode 21 of the single battery 10 is configured to form an electrical connection through contacting with one of the bipolar plates 30 located on both sides of the single battery 10, and the second electrode 22 of the single battery 10 is configured to form an electrical connection through contacting with the other of the bipolar plates 30 located on both side of the single battery 10.

For example, referring to Fig. 1, in the energy storage apparatus 01, the plurality of single batteries 10 may include two end single batteries 101. For example, the plurality of single batteries 10 may be sequentially arranged in the same row, and two end single batteries 101 may be located at two ends of the energy storage apparatus 01 respectively. For example, the plurality of single batteries 10 further include at least one intermediate single battery 102, and the at least one intermediate single battery 102 is located between the two end single batteries 101. For example, one end single battery 101, the at least one intermediate single battery 102, and the other end single battery 101 in the energy storage apparatus 01 are sequentially connected in series, but are not limited to this.

For example, in some embodiments of the present disclosure, the plurality of single batteries in the energy storage apparatus may include only two single batteries, in which case the two single batteries may respectively act as the end single batteries of the energy storage apparatus, and the number of the plurality of single batteries is not limited in the embodiments of the present disclosure.

For example, in the energy storage apparatus 01 illustrated in Fig. 1, a count of the single batteries 10 is greater than 2.

For example, referring to Fig. 1, in the energy storage apparatus 01, one of the first electrode 21 and the second electrode 22 includes a positive current collector 211 and a positive electrode material 212, and the other of the second electrode 22 and the first electrode 21 includes a negative current collector 221 and a negative electrode material 222. For example, referring to Fig. 1, the positive current collector 211 includes a first contacting region 2114, the negative current collector 221 includes a second contacting region 2214, in the same single battery 10, each of the first contacting region 2114 and the second contacting region 2214 is configured to form an electrical connection through contacting with the housing component 11 or the bipolar plate 30 corresponding to the single battery 10. That is to say, the first contacting region 2114 is configured to form an electrical connection through contacting with one of the housing component 11 and the bipolar plate 30 corresponding to one single battery 10, and the second contacting region 2214 is configured to form an electrical connection through contacting with the other of the bipolar plate 30 and housing component 11 corresponding to the same single battery 10. For example, the first contacting region 2114 and the second contacting region 2214 may be configured to form electrical connection through contacting with two bipolar plates 30 located on both sides of the single battery 10, respectively. That is, the first contacting region 2114 may be configured to form an electrical connection through contacting with one of two bipolar plates 30 located on both sides of one single battery 10, the second contacting region 2214 may be configured to form an electrical connection through contacting with the other of the two bipolar plates 30 located on both sides of the same single battery 10. It should be noted that no positive electrode material 212 is provided in the first contacting region 2114 and no negative electrode material 222 is provided in the second contacting region 2214.

For example, referring to Fig. 1, the embodiments of the present disclosure are illustrated by taking that the first electrode 21 includes the positive current collector 211 and the second electrode 22 includes the negative current collector 221 as an example.

For example, referring to Fig. 1, for the end single battery 101, each of the first contacting region 2114 and the second contacting region 2214 is configured to be electrically connected with the housing component 11 or bipolar plate 30 corresponding to the end single battery 101. For example, for the intermediate single battery 102, the first contacting region 2114 and the second contacting region 2214 are configured to be electrically connected with two bipolar plates 30 located on both sides of the intermediate single battery 102, respectively. By providing no positive electrode material 212 and no negative electrode material 222 in the first contacting region 2114 or the second contacting region 2214 of the battery cell 20, the battery cell 20 can be well electrically connected with the housing component 11 or the bipolar plate 30.

For example, referring to Fig. 1, the first contacting region 2114 of the battery cell 20 of an end single battery 101A is electrically connected with the corresponding housing component 11, and the second contacting region 2214 of the battery cell 20 of the end single battery 101A is electrically connected with the bipolar plate 30. For an intermediate single battery 102A adjacent to the end single battery 101A, the first contacting region 2114 of the battery cell 20 of the intermediate single battery 102A is electrically connected with the bipolar plate 30 adjacent to the end single battery 101A, so as to realize the electrical connection with the second contacting region 2214 of the end single battery 101A. The second contacting region 2214 of the intermediate single battery 102A is electrically connected with the bipolar plate 30 adjacent to another intermediate single battery 102. At this point, the end single battery 101A is connected in series with the adjacent intermediate single battery 102A, but is not limited to this.

For example, referring to Fig. 1, in the energy storage apparatus 01, for the end single battery 101, the first contacting region 2114 and the second contacting region 2214 are in contact with the housing component 11 and the bipolar plate 30 corresponding to the end single battery 101, respectively. For example, for the intermediate single battery 102, the first contacting region 2114 and the second contacting region 2214 are in contact with two bipolar plates 30 located on both sides of the intermediate single battery 102, respectively.

For example, referring to Fig. 1, the first contacting region 2114 or the second contacting region 2214 is connected with the housing component 11 corresponding to the single battery 10 through direct contacting; or, the first contacting region 2114 or the second contacting region 2214 is connected with the bipolar plate 30 through direct contacting. Therefore, connecting structures such as the connecting sheet in the traditional scheme can be omitted, which is conducive to the miniaturization design of the energy storage apparatus 01.

For example, referring to Fig. 1, a contacting area between the first contacting region 2114 and the housing component 11 or the bipolar plate 30 corresponding to the single battery 10 may not be less than 9 mm². For example, a contacting area of the second contacting region 2214 and the housing component 11 or the bipolar plate 30 corresponding to the single battery 10 may not be less than 9 mm². By this arrangement, the contacting area can be increased, and a surface collection flow can be formed on each contacting surface, which is conducive to the transmission of electrical signals and improving the efficiency of energy transmission, at the same time, it is further conducive to the uniform and complete formation process of each single battery 10.

For example, referring to Fig. 1, in the same single battery 10, the first contacting region 2114 is the surface of the positive current collector 211 at a side close to the housing component 11 or the bipolar plate 30, and the second contacting region 2214 is the surface of the negative current collector 221 at a side close to the bipolar plate 30 or the housing component 11. For example, for the end single battery 101A in the energy storage apparatus 01 as illustrated in Fig. 1, the first contacting region 2114 of the positive current collector 211 is the surface close to the housing component 11 corresponding to the end single battery 101A, the second contacting region 2214 of the negative current collector 221 is the surface close to the bipolar plate 30 immediately adjacent to the battery cell 20 of the end single battery 101A, but is not limited to this.

For example, for the intermediate single battery 102A in the energy storage apparatus 01 as illustrated in Fig. 1, the first contacting region 2114 may be the surface of the positive current collector 211 at a side close to the bipolar plate 30 located on one side of the single battery 10, the second contacting region 2214 may be the surface of the negative current collector 221 at a side close to the bipolar plate 30 located on the other side of the single battery 10.

For example, referring to Fig. 1, the positive current collector 211 further includes a first coating region 2113, and the positive electrode material 212 is coated in the first coating region 2113. The negative current collector 221 further includes a second coating region 2213, and the negative electrode material 222 is coated in the second coating region 2213. In addition, it should be noted that, in the positive current collector 211, the positive electrode material 212 is only provided in the first coating region 2113, but is not provided in the first contacting region 2114. In the negative current collector 221, the negative electrode material 222 is only provided in the second coating region 2213, but is not provided in the second contacting region 2214.

For example, referring to Fig. 1, for the positive current collector 211 provided with the first contacting region 2114, the first coating region 2113 may include a part of a surface of the positive current collector 211 that is opposite to the first contacting region 2114. The first contacting region 2114 is in contact with the housing component 11 or the bipolar plate 30 corresponding to the single battery 10, and the first coating region 2113 is coated with the positive electrode material 212. At this point, the utilization of the positive current collector 211 may be maximized as much as possible. Similarly, the second coating region 2213 may include a part of a surface of the negative current collector 221 that is opposite to the second contacting region 2214, thereby maximizing the utilization of the negative current collector 221.

For example, referring to Fig. 1, an area of the first coating region 2113 can be adjusted according to the arrangement range of the positive electrode material 212. For example, coverage areas of the first coating regions 2113 of different positive current collectors 211 may be different, which depends on design requirements. For example, a coverage area of the second coating region 2213 can also be adjusted according to the arrangement range of the negative electrode material 222. For example, coverage areas of the second coating regions 2213 of different negative current collectors 221 may also be different, which depends on the design requirements, and are not limited in the embodiments of the present disclosure.

For example, referring to Fig. 1, the positive current collector 211 further includes a plurality of first connecting regions 2112, the negative current collector 221 further includes a plurality of second connecting regions 2212, and in the same single battery 10, the plurality of first connecting regions 2112 of the positive current collector 211 are electrically connected, and the plurality of second connecting regions 2212 of the negative current collector 221 are electrically connected.

For example, referring to Fig. 1, in one single battery 10, the first connecting region 2112 and the second connecting region 2212 are located at two opposite ends of the energy storage apparatus 01, but are not limited to this. For example, the first connecting region 2112 and the second connecting region 2212 may be flexible conductive objects. For example, the first connecting region 2112 may include aluminum foil or composite foil, and the second connecting region 2212 may include copper foil and composite foil, but is not limited to this. For example, the composite foil can be formed by sputtering or loading (for example, electroplating, electroless plating, coating) copper, aluminum, carbon and the like, on a polymer film such as polyethylene glycol terephthalate (PET), but is not limited to this. For example, the shape of the first connecting region 2112 and the shape of the second connecting region 2212 may be different, as long as that the plurality of first connecting regions 2112 are electrically connected with each other and the plurality of second connecting regions 2212 are electrically connected with each other, and the specific arrangement of the first connecting region 2112 and the second connecting region 2212 in the embodiments of the present disclosure is not limited.

It is understood that, in general, on the surface of the positive current collector 211 where the first coating region 2113 is provided, the first coating region 2113 does not cover the entire surface, then a part of the surface of positive current collector 211 not including the first coating region 2113 acts as the first connecting region 2112. Similarly, the same manner also applies for the second connecting region 2212, which will not be repeated here.

It is understood that, the single battery in the present disclosure may be a wound battery or a laminated battery. For a wound battery, each of the positive current collector 211 and the negative current collector 221 is one-piece structure, and after the positive current collector 211 and the negative current collector 221 are stacked, winding is performed from one end to form the wound battery. At this point, the "positive current collector 211 further includes a plurality of first connecting regions 2112" can be understood to mean that in the thickness direction of the wound battery, the part of the positive current collector 211 located in each layer includes a first connecting region 2112, and the plurality of first connecting regions 2112 are connected with each other to form an integrated structure. Similarly, the "negative current collector 221 further includes a plurality of second connecting regions 2212" can be understood to mean that in the thickness direction of the wound battery, the part of the negative current collector 221 located in each layer includes a second connecting region 2212, and the plurality of second connecting regions 2212 are connected with each other to form an integrated structure.

For example, referring to Fig. 1, the positive current collectors 211 and the negative current collectors 221 are alternatively arranged and insulated from each other. By this arrangement, the layout spacing between the positive current collector 211 and the negative current collector 221 can be minimized, and the external size of the single battery 10 can be optimized, which is conducive to the miniaturization design of the single battery 10.

For example, referring to Fig. 1, for the positive current collector 211, the positive electrode material 212 is not provided in the first connecting region 2112; for the negative current collector 221, the negative electrode material 222 is not provided in the second connecting region 2212.

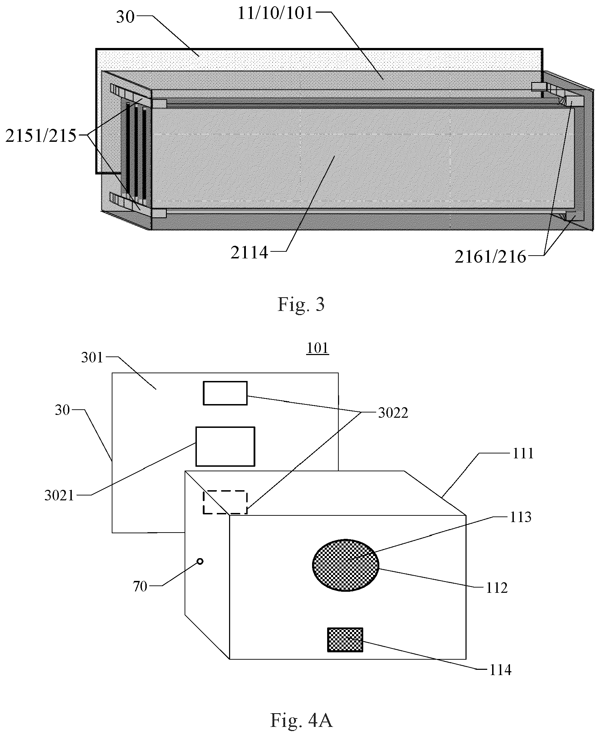

Fig. 2 is a structural diagram of another energy storage apparatus provided by at least one embodiment of the present disclosure. Fig. 3 is a structural diagram of a single battery in another energy storage apparatus provided by at least one embodiment of the present disclosure.

For example, referring to Fig. 2, for the energy storage apparatus 02 illustrated in Fig. 2, the difference from the energy storage apparatus 01 illustrated in Fig. 1 is that: the positive current collector 211 in the energy storage apparatus 02 further includes at least one positive electrode tab group 215, and the negative current collector 221 further includes at least one negative electrode tab group 216, the other structures can be referred to the relevant descriptions in the above embodiments, which will not be described here.

It should be noted that in the vertical direction illustrated in Fig. 2, positive electrode tabs 2151 of the positive current collector 211 are all located at the upper end of the energy storage apparatus 02, and the negative electrode tabs 2161 of the negative current collector 221 are all located at the lower end of the energy storage apparatus 02. Therefore, the number of the positive electrode tab group 215 in the energy storage apparatus 02 is one, and the number of the negative electrode tab group 216 is also one. For the energy storage apparatus illustrated in Fig. 3, in the vertical direction illustrated in Fig. 3, a part of the positive electrode tabs 2151 of the positive current collector 211 are located at the upper end of the energy storage apparatus, the other part of the positive electrode tabs 2151 are located at the lower end of the energy storage apparatus, and a part of the negative electrode tabs 2161 of the negative current collector 221 are located at the upper end of the energy storage apparatus, the other part of the negative electrode tabs 2161 are located at the lower end of the energy storage apparatus. Therefore, in the energy storage apparatus illustrated in Fig. 3, the number of the positive electrode tab groups 215 is two, and the number of the negative electrode tab groups 216 is also two.

For example, referring to Fig. 2, the positive current collector 211 further includes at least one positive electrode tab group 215, the negative current collector 221 further includes at least one negative electrode tab group 216, each positive electrode tab group 215 includes at least one positive electrode tab 2151, and each negative electrode tab group 216 includes at least one negative electrode tab 2161. For example, the positive electrode tab 2151 may be a part of conductive structure protruded from the first connecting region 2112, and at least one of the plurality of the first connecting regions 2112 electrically connected with each other protrudes to form a positive electrode tab 2151. For example, the negative electrode tab 2161 may be a part of conductive structure protruded from the second connecting region 2212, and at least one of the plurality of second connecting regions 2212 electrically connected with each other protrudes to form a negative electrode tab 2161. For example, referring to Fig. 2, in the same single battery 10, at least one positive electrode tab 2151 of each positive electrode tab group 215 is electrically connected with one of the housing component 11 and the bipolar plate 30 that is electrically connected with and corresponds to the first contacting region 2114. At least one negative electrode tab 2161 of each negative electrode tab group 216 is electrically connected with the other of the bipolar plate 30 and the housing component 11 that is electrically connected with and corresponds to the second contacting region 2214. Alternatively, at least one positive electrode tab 2151 of each positive electrode tab group 215 is electrically connected with the bipolar plate 30 that is electrically connected with and corresponds to the first contacting region 2114, and at least one negative electrode tab 2161 of each negative electrode tab group 216 is electrically connected with the bipolar plate 30 that is electrically connected with and corresponds to the second contacting region 2214.

For example, referring to Fig. 2, the positive electrode tab group 215 and the negative electrode tab group 216 are located in the receiving chamber 12 of the single battery 10. For example, for the end single battery 101A, at least one positive electrode tab 2151 in the positive electrode tab group 215 is electrically connected with the housing component 11 that is electrically connected with and corresponds to the first contacting region 2114, and at least one negative electrode tab 2161 in the negative electrode tab group 216 is electrically connected with the bipolar plate 30 that is electrically connected with and corresponds to the second contacting region 2214, but is not limited to this. For example, for the intermediate single battery 102A, the first contacting region 2114 corresponds to one bipolar plate 30 close to the end single battery 101A, and at least one positive electrode tab 2151 in the positive electrode tab group 215 is electrically connected with this bipolar plate 30; the second contacting region 2214 corresponds to another bipolar plate 30 away from the end single battery 101A, and at least one negative electrode tab 2161 in the negative electrode tab group 216 is electrically connected with the another bipolar plate 30.

For example, referring to Fig. 2, in the case where the first contacting region 2114 (or the second contacting region 2214) of the single battery 10 has not been effectively electrically connected with the housing component 11 or the bipolar plate 30 corresponding to the single battery 10 (for example, the contacting area may not be less than 9mm²) before the formation stage of the energy storage apparatus 02, in the initial formation process, the contacting impedance between the single batteries 10 may be uneven, which eventually causes differences in the state of charge (SOC) during formation and integrity of solid electrolyte interface (SEI) of negative electrode between the single batteries 10, which affects the performance of energy storage apparatus 02. By arranging the positive electrode tab group 215 and the negative electrode tab group 216 in the receiving chamber 12 of the single battery 10, the consistency of the contact resistance of the single batteries 10 in the formation stage can be effectively ensured, so that the formation effect is good, and after the formation, the contacting region in each single battery 10 will be electrically connected with the housing component 11 or the bipolar plate 30 through the expansion of the battery cell.

For example, referring to Fig. 2, the number of the positive electrode tab group 215 of the positive current collector 211 and the number of the negative electrode tab group 216 of the negative current collector 221 are both one, but is not limited to this. Of course, a count of the positive electrode tab groups 215 of the positive current collector 211 and a count of the negative electrode tab groups 216 of the negative current collector 221 may also be greater than or equal to 3, and the specific numbers may be flexibly set according to the setting requirements, which are not limited in the embodiments of the present disclosure.

For example, referring to Fig. 2, in the energy storage apparatus 02, the plurality of single batteries 10 include two end single batteries 101, and in the same end single battery 101, the first electrode 21 and the second electrode 22 of the end single battery 101 are configured to form electrical connection through contacting with the housing component 11 and the bipolar plate 30 corresponding to the end single battery 101, respectively; and the housing components 11 corresponding to the two end single batteries 101 can act as the power supply output electrodes of the energy storage apparatus 02.

For example, referring to Fig. 2, in the energy storage apparatus 02, the plurality of single batteries 10 can be sequentially connected in series, and two end single batteries 101 are located at two ends of the plurality of single batteries 10 in the arrangement direction. For example, for the same end single battery 101, such as the end single battery 101A, the first electrode 21 is configured to form an electrical connection with the housing component 11 corresponding to the end single battery 101A through contacting, and the second electrode 22 is configured to form an electrical connection with the bipolar plate 30 corresponding to the end single battery 101A through contacting; therefore, the polarity of the housing component 11 corresponding to the end single battery 101A is the same as that of the first electrode 21.

For example, referring to Fig. 2, one of the first electrode 21 and the second electrode 22 of one of the two end single batteries 101 is configured to form an electrical connection through contacting with the housing component 11 corresponding to the end single battery 101; the other of the second electrode 22 and the first electrode 21 of the other of the two end single batteries 101 is configured to form an electrical connection through contacting with the housing component 11 corresponding to the end single battery 101. Therefore, the polarities of the housing components 11 corresponding to the two end single batteries 101 in the energy storage apparatus 02 are opposite.

For example, referring to Fig. 2, the energy storage apparatus 02 includes at least one intermediate single battery 102 located between the two end single batteries 101, and in the same intermediate single battery 102, the first electrode 21 and the second electrode 22 are configured to form electrical connection through contacting with the bipolar plates 30 located on both sides of the intermediate single battery 102. For example, the both sides of the battery cell 20 of the intermediate single battery 102 are provided with bipolar plates 30, respectively, so as to be electrically connected with the first electrode 21 and the second electrode 22 of the battery cell 20 respectively.

For example, referring to Fig. 2, the plurality of single batteries 10 may be sequentially arranged in the same row, and each single battery 10 corresponds to its own independent receiving chamber 12. For example, the volume of the receiving chamber 12 corresponding to each intermediate single battery 101 may be the same. For example, the volume of the receiving chamber 12 corresponding to the end single battery 101 may be equal or approximately equal to, but not limited to, the volume of the receiving chamber 12 corresponding to the intermediate single battery 102.

For example, referring to Fig. 2, the area of the housing component 11 corresponding to the end single battery 101 is greater than the area of the housing component 11 corresponding to the intermediate single battery 102. For example, the receiving chamber 12 corresponding to each single battery 10 may be cuboid or cube, which is not limited by the embodiments of the present disclosure.

For example, referring to Fig. 2, the receiving chamber 12 corresponding to the intermediate single battery 102 is formed by a sealed connection of two opposite bipolar plates 30 and the housing component 11 corresponding to the intermediate single battery 102. The end single battery 101 corresponds to only one bipolar plate 30, and the receiving chamber 12 corresponding to the end single battery 101 is formed by the bipolar plate 30 and the housing component 11 corresponding to the end single battery 101. For example, the housing component 11 corresponding to the end single battery 101 may include, but is not limited to, a portion facing to the bipolar plate 30.

For example, referring to Fig. 2, the housing component 11 corresponding to the end single battery 101 is a conductor, and in one end single battery 101, for example, in the end single battery 101A, at least one positive electrode tab 2151 and the first contacting region 2114 are electrically connected with the side wall of the housing component 11 corresponding to the end single battery 101A, respectively, at least one negative electrode tab 2161 and a second contacting region 2214 are electrically connected with the bipolar plate 30 corresponding to the end single battery 101A, respectively.

For example, referring to Fig. 2, for another end single battery 101 opposite to the end single battery 101A, at least one negative electrode tab 2161 and the second contacting region 2214 are electrically connected with the side wall of the housing component 11 corresponding to the end single battery 101, respectively, at least one positive electrode tab 2151 and the first contacting region 2114 are electrically connected with the bipolar plates 30 corresponding to the end single battery 101, respectively, so that the housing components 11 corresponding to the two end single batteries 101 respectively act as the two output electrodes of the energy storage apparatus 02.

For example, in the energy storage apparatus 02 illustrated in Fig. 2, the positive electrode tab 2151 and the first contacting region 2114 of the same end single battery 101 are connected with the same side wall of housing component 11, and the negative electrode tab 2161 and the second contacting region 2214 of the same end single battery 101 are also connected with the same side wall of another housing component 11, however, the embodiments of the present disclosure are not limited to this.

For example, in some embodiments of the present disclosure, referring to Fig. 3, the positive electrode tab 2151 and the first contacting region 2114 of the same end single battery 101 may be respectively connected with different side walls of the housing component 11, and the negative electrode tab 2161 and the second contacting region may also be respectively connected with different side walls of the housing component 11, in which case, the positive electrode tab 2151 and the negative electrode tab 2161 may be located respectively on two opposite side walls of the same end single battery 101, and the first contacting region 2114 and the second contacting region may be located respectively on two other opposite side walls of the same end single battery 101, but not limited to this, which can be designed according to the actual spatial arrangement, the embodiments of the present disclosure do not limit this. For the structural form of the battery cell in the single battery illustrated in Fig. 3, please refer to the relevant instructions in the following embodiments.

For example, as illustrated in Fig. 3, both of a count of positive electrode tab groups 215 in the positive current collector 211 (please refer to Fig. 2) and a count of the negative electrode tab groups 216 in the negative current collector 221 (please refer to Fig. 2) are two, and in the lateral direction illustrated in Fig. 3, the two groups of the positive electrode tab groups 215 are located at one end of the end single battery 101, and the two groups of the negative electrode tab groups 216 are located at the other end of the end single battery 101, but not limited to this.

For example, referring to Fig. 2, the energy storage apparatus 02 further includes an insulating structure 40. For example, in the case where the housing component 11 corresponding to the single battery 10 is a conductor, the insulating structure 40 is arranged between the housing component 11 and the bipolar plate 30 corresponding to the single battery 10, so that an electronic insulation between the housing component 11 and the bipolar plate 30 corresponding to the single battery 10 can be achieved.

For example, referring to Fig. 2, for the end single battery 101A, in the case where the corresponding housing component 11 is a conductor, the housing component 11 and the bipolar plate 30 connected thereto are respectively and electrically connected with the first electrode 21 and the second electrode 22 of opposite polarities, so that the polarities of the housing component 11 and the bipolar plate 30 are opposite. Therefore, by arranging the insulating structure 40, the risk of short circuit between the housing component 11 and the bipolar plate 30 corresponding to the end single battery 101A can be reduced.

For example, referring to Fig. 2, for the intermediate single battery 102, the first electrode 21 and the second electrode 22 are connected with two bipolar plates 30 located on both sides of the intermediate single battery 102, respectively; and in the case where the corresponding housing component 11 of the intermediate single battery 102 is a conductor, it is necessary to prevent the housing component 11 from contacting with the first electrode 21 and the second electrode 22 at the same time, so that the short circuit can be avoided. For example, the insulating structure 40 is connected with the housing component 11 corresponding to the intermediate single battery 102, the housing component 11 corresponding to the adjacent single battery 10, and the bipolar plate 30 between the intermediate single battery 102 and the adjacent single battery 10, respectively, so that the risk of the short circuit within the single battery 10, or the short circuit between different single batteries 10 can be reduced.

For example, referring to Fig. 2, the insulating structure 40 may be arranged at the position where the housing component 11 and the bipolar plate 30 corresponding to the single battery 10 are matched. For example, the insulating structure 40 can include a plurality of clamping slots, and the housing component 11 and the bipolar plate 30 corresponding to the single battery 10 can be clamped in different clamping slots respectively, so as to achieve connection and sealing, but not limited to this. For example, the insulating structure 40 may include a plastic element and be formed by an injection molding process, but is not limited to this. For example, the insulating structure 40 may be, by any other means, coated on a contacting surface between the housing component 11 and the bipolar plate 30 corresponding to the single battery 10, which is not limited in the embodiments of the present disclosure.

For example, referring to Fig. 2, the insulating structure 40 may include polymethylpentene. Because the density of polymethylpentene is low, it has little influence on the mass energy density of the energy storage apparatus. At the same time, the thermal sealing effect of polymethylpentene is good, which is conducive to resisting the internal pressure generated during the use of energy storage apparatus 02. For example, the manufacturing process of the insulating structure 40 may include at least one of injection molding of embedded component, coating, sputtering, and 3D printing, which is not limited in the embodiments of the present disclosure.

For example, referring to Fig. 2, the energy storage apparatus 02 may further include an electronic isolating component 50 located in the receiving chamber 12. For example, referring to Fig. 1, an electronic isolating component 50 includes an insulating substance. For example, the electronic isolating component 50 may include a flexible isolating component. For example, the electronic isolating component 50 may include at least one of polymethylpentene, polypropylene, polyvinyl chloride, polyether nitrile, polyurethane, polyamide, polymer derivatives, and copolymer. For example, the electronic isolating component 50 may be connected with, but not limited to, the housing component 11 corresponding to the single battery 10. For example, the electronic isolating component 50 may further be closely fitted to the housing component 11 corresponding to the single battery 10, which is not limited in the embodiments of the present disclosure.

For example, with reference to Fig. 2, the electronic isolating component 50 may include a plurality of portions located within the receiving chamber 12. For example, the volumes and shapes of the plurality of portions of the electronic isolating components 50 located in the receiving chambers 12 may be different. For example, the electronic isolating components 50 may be located at corners of the end single battery 101 or the intermediate single battery 102. For example, the shape and trend of the electronic isolating component 50 can be changed according to different arrangement positions of the positive current collector 211 and the negative current collector 221, so as to better achieve good isolating effects at different positions. The embodiments of the present disclosure do not limit the specific form of the electronic isolating component 50.

For example, as illustrated in left part of Fig. 2, the electronic isolating component 50 may include a first electronic isolating component 501 and a second electronic isolating component 502. For example, the volume of the first electronic isolating component 501 is smaller than the volume of the second electronic isolating component 502, but is not limited to this. For example, the cross-section of the first electronic isolating component 501 as illustrated in left part of Fig. 2 is rectangular and the first electronic isolating component 501 is located at a corner where the housing component 11 and the bipolar plate 30 are connected with each other. For example, the cross-section of the second electronic isolating component 502 as illustrated in Fig. 2 includes a long strip portion, and the second electronic isolating component 502 is located between the housing component 11 corresponding to the end single battery 101 and the second connecting region 2212 of the negative current collector 221 which is close to the housing component 11, but is not limited to this.

For example, referring to Fig. 2, the first electronic isolating component 501 is configured to insulate the first electrode 21 of the single battery 10 from the housing component 11 or the bipolar plate 30 electrically connected with the second electrode 22. For example, the second electronic isolating component 502 is configured to insulate the second electrode 22 of the single battery 10 from the housing component 11 or the bipolar plate 30 electrically connected with the first electrode 21.

For example, referring to Fig. 1, for the end single battery 101A, in the case where the housing component 11 corresponding to the end single battery 101A is a conductor, the polarity of the housing component 11 and the polarity of the bipolar plate 30 which is connected with the housing component 11 are opposite. For example, the housing component 11 corresponding to the end single battery 101A is electrically connected with the first electrode 21, and the bipolar plate 30 is electrically connected with the second electrode 22. At this point, by arranging the electronic isolating component 50, it is beneficial to insulating the bipolar plate 30 from the first electrode 21; and by arranging the electronic isolating component 50, it is beneficial to insulating the housing component 11 corresponding to the end single battery 101A from the second electrode 22.

For example, referring to Fig. 1, for the intermediate single battery 102A, the first electrode 21 is electrically connected with the bipolar plate 30 close to the end single battery 101A, and the second electrode 22 is electrically connected with the bipolar plate 30 close to another intermediate single battery 102. At this point, by arranging the electronic isolating component 50 in the intermediate single battery 102A, it is beneficial to insulating the first electrode 21 from the bipolar plate 30 connected with the second electrode 22, and insulate the second electrode 22 from the bipolar plate 30 connected with the first electrode 21, so that the safety performance of the energy storage apparatus 01 can be improved.

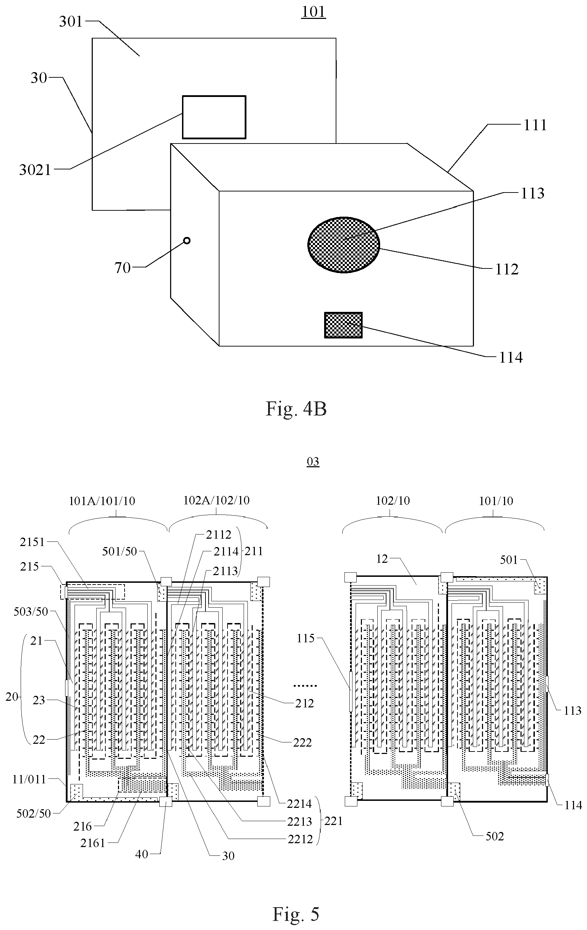

Fig. 4A is a schematic structural diagram of an end single battery and a bipolar plate of another energy storage apparatus provided by at least one embodiment of the present disclosure. Fig. 4B is a schematic structural diagram of an end single battery and a bipolar plate of another energy storage apparatus provided by at least one embodiment of the present disclosure. Fig. 5 is a structural diagram of another energy storage apparatus provided by at least one embodiment of the present disclosure.

For example, the difference between the energy storage apparatus 03 provided in Fig. 5 and the energy storage apparatus 02 provided in Fig. 2 is that, the energy storage apparatus 03 adopts the end single battery illustrated in Fig. 4A, and other structures are the same.

For example, referring to Fig. 4A and Fig. 5, the housing component 11 corresponding to the end single battery 101 includes a first main body portion 111, a first hole region 112 located in the first main body portion 111, and a first conductive portion 113 arranged in the first hole region 112 and connected with the first main body portion 111 to be insulated from each other and sealed therebetween. The first main body portion 111 of the housing component 11 corresponding to the end single battery 101 is connected with the bipolar plate 30 to be insulated from each other and sealed therebetween.

For example, referring to Fig. 4A and Fig. 5, the first hole region 112 may be arranged in the housing component 11, and the first conductive portion 113 acts as a part electrically connected with the first electrode 21 or the second electrode 22 of the end single battery 101. For example, the area of the first hole region 112 may be smaller than the area of the first main body portion 111. For example, the first hole region 112 can be arranged opposite to the bipolar plate 30 adjacent to the end single battery 101. For example, the orthographic projection of the first hole region 112 on the bipolar plate 30 adjacent to the end single battery 101 can be any of, but not limited to, circle, ellipse, equilateral polygon, and polygon.

For example, referring to Fig. 4A and Fig. 5, the first conductive portion 113 may be a conductor arranged independently in the first hole region 112. For example, in the case where the first main body portion 111 of the housing component 11 corresponding to the end single battery 101 is conductive, the first conductive portion 113 may be made of the same material as the first main body portion 111, but is not limited to this. For example, the outer periphery of the first hole region 112 may be provided with an insulating material, such as a rubber ring, and the like, so that the first conductive portion 113 and the first main body portion 111 are insulated from each other and are sealed at the connection position. For example, the insulating material located between the first conductive portion 113 and the first main body portion 111 may further take other forms, such as a plastic ring and the like, so that insulation and sealing between the first conductive portion 113 and the first main body portion 111 can be achieved, which are not limited by the embodiments of the present disclosure. For example, the insulating material between the first conductive portion 113 and the first main body portion 111 may include polymethylpentene, and the manufacturing process of the insulating material includes, but is not limited to, at least one of the injection molding of embedded component, coating, sputtering, and 3D printing, but is not limited to this.

For example, referring to Fig. 4A and Fig. 5, one of the first electrode 21 and the second electrode 22 of the end single battery 101 forms an electrical connection with the first conductive portion 113 through contacting, and the other of the first electrode 21 and the second electrode 22 of the end single battery 101 forms an electrical connection with the bipolar plate 30 through contacting. Therefore, the end single battery 101 is electrically connected with one of the second electrode 22 and the first electrode 21 of the adjacent single battery 10. At this point, the polarity of the first conductive portion 113 of the housing component 11 corresponding to the end single battery 101 is opposite to the polarity of the bipolar plate 30 connected with the end single battery 101. For example, the first conductive portion 113 in the energy storage apparatus 03 can replace the terminal post and other structures in the traditional battery scheme, and can act as the input/output terminal when the energy storage apparatus 03 provides energy to the external circuit.

For example, referring to Fig. 4A and Fig. 5, the connection between the first electrode 21 (or the second electrode 22) and the housing component 11 can be more flexible by making the first conductive portion 113 as an independent conductive region of the housing component 11, the first conductive portion 113 with a specific region can be allowed to be designed according to different design requirements.

For example, referring to Fig. 4A and Fig. 5, the first main body portion 111 of the housing component 11 corresponding to the end single battery 101 is connected with the bipolar plate 30 to be insulated from each other and sealed therebetween.

For example, referring to Fig. 4A and Fig. 5, for the end single battery 101, the first main body 111 of the corresponding housing component 11 is not electrically connected with the first electrode 21 and is not electrically connected with the second electrode 22, and the first main body 111 is insulated from the first conductive portion 113 and is insulated from the bipolar plate 30. For example, the first main body portion 111 of the end single battery 101 may be conductive. Alternatively, the first main body portion 111 of the end single battery 101 may be non-conductive.

For example, the end single battery 101A in the energy storage apparatus 03 as shown in Fig. 5 is taken as an example, by this arrangement, the probability of electrical signal transmission between the first main body portion 111 of the housing component 11 corresponding to the end single battery 101A and the first conductive portion 113 or the bipolar plate 30 can be reduced, and the risk of short circuit between the second electrode 22 electrically connected with the bipolar plate 30 and the first electrode 21 electrically connected with the first conductive portion 113 can further be reduced, which is conducive to improving the safety performance of the end single battery 101.

For example, referring to Fig. 4A and Fig. 5, the connection between the first main body portion 111 of the housing component 11 corresponding to the end single battery 101 and the bipolar plate 30 may be achieved by the insulating structure 40. For example, the structure and characteristics of the insulating structure 40 may be the same as or similar to those of the insulating structure 40 in the above embodiments (please refer to Fig. 1), for details, please refer to descriptions above, which will not be repeated here.

For example, referring to Fig. 4A and Fig. 5, for the intermediate single battery 102, the corresponding housing component 11 is not electrically connected with the first electrode 21 and is not electrically connected with the second electrode 22, and the first electrode 21 and the second electrode 22 are respectively connected with the bipolar plates 30 on both sides of the intermediate single battery 102. For example, the housing component 11 corresponding to the intermediate single battery 102 and the bipolar plates 30 on both sides of the intermediate single battery 102 can also be insulated to enhance safety performance.

For example, referring to Fig. 4A and Fig. 5, the housing component 11 corresponding to the end single battery 101 may further include a second conductive portion 114, at least one positive electrode tab 2151 or at least one negative electrode tab 2161 of the end single battery 101 is electrically connected with the housing component 11 by the second conductive portion 114. In the same end single battery 101, the second conductive portion 114 and the first conductive portion 113 are located on the side wall of the housing component 11 corresponding to the end single battery 101.

For example, referring to Fig. 4A and Fig. 5, the end single battery 101A is taken as an example, the second conductive portion 114 and the first conductive portion 113 may be located on the same side wall of the housing component 11 corresponding to the end single battery 101A. For example, the orthographic projection of the second conductive portion 114 on the bipolar plate 30 adjacent to the end single battery 101A can also be any of, but is not limited to, circle, ellipse, equilateral polygon, and polygon. For example, the second conductive portion 114 may use the same conductive material as the first conductive portion 113, but is not limited to this.

For example, referring to Fig. 4A and Fig. 5, in some embodiments of the present disclosure, the second conductive portion 114 and the first conductive portion 113 may respectively be located on different side walls of the housing component 11 corresponding to the end single battery 101. For example, the first conductive portion 113 may be located at a side wall of the housing component 11 corresponding to end single battery 101 that is opposite to the bipolar plate 30, and the second conductive portion 114 may be located at a side wall of the housing component 11 corresponding to the end single battery 101 that is adjacent to the bipolar plate 30, but is not limited to this, the positions of the first conductive portion 113 and the second conductive portion 114 can be flexibly arranged according to the design requirements.

For example, referring to Fig. 4A and Fig. 5, the second conductive portion 114 may act as an independent conductive region of the housing component 11, and may be electrically connected with at least one positive electrode tab 2151 of the positive electrode tab group 215 in the end single battery 101A, this connection manner is more flexible, and it is convenient to design the second conductive portion 114 with a specific region according to different design requirements.

For example, referring to Fig. 4A and Fig. 5, the first electronic isolating component 501 and the second electronic isolating component 502 may also be provided in the end single battery 101 of the energy storage apparatus 03. For example, the end single battery 101A is taken as an example, the first electronic isolating component 501 is arranged at the connection position of the housing component 11 corresponding to the end single battery 101A and the bipolar plate 30, so as to reduce the risk of short circuit caused by the second electrode 22 and the first electrode 21 being electrically connected with the bipolar plate 30 at the same time. The second electronic isolating component 502 is arranged between the second electrode 22 in the end single battery 101A that is not connected with the first conductive portion 113 and the housing component 11, so as to reduce the risk of short circuit caused by the first electrode 21 and the second electrode 22 being electrically connected with the conductive portion 113 at the same time.

Therefore, referring to Fig. 4A and Fig. 5, the first electronic isolating component 501 and the second electronic isolating component 502 can improve the good insulating effect between electrodes of different polarities in the single battery, for the shape and material characteristics of the first electronic isolating component 501 and the second electronic isolating component 502, please refer to the relevant descriptions of Fig. 2 in the above embodiments, which will not be repeated here.

For example, referring to Fig. 4A and Fig. 5, in this scheme, the energy storage apparatus 03 may further include a third electronic isolating component 503 which is located in the receiving chamber 12 corresponding to the end single battery 101, and is configured to make one of the first contacting region 2114 and the second contacting region 2214 electrically connected with the first conductive portion 113 of the end single battery 101 be insulated with the first main body portion 111, and for example, be not in contact with the second conductive portion 114. For example, the third electronic isolating component 503 may be connected with the housing component 11, or, the third electronic isolating component 503 may be attached to the outer wall of the housing component 11, the embodiments of the present disclosure do not limit the connection manner of the third electronic isolating component 503.

For example, referring to Fig. 4A and Fig. 5, the end single battery 101A is taken as an example, the first contacting region 2114 of the positive current collector 211 is connected with the first conductive portion 113, a part of a surface of the positive current collector 211 facing the first conductive portion 113 is separated from the first main body portion 111 of the housing component 11 by the third electronic isolating component 503.

For example, referring to Fig. 4A and Fig. 5, in the energy storage apparatus 03, at least one bipolar plate 30 includes a bipolar plate main body 301, a first conductive region 3021, and a second conductive region 3022. For example, the bipolar plate main body 301 is connected with the first conductive region 3021 to be insulated from each other, and the bipolar plate main body 301 is connected with the second conductive region 3022 to be insulated from each other. For example, one of the first electrode 21 and the second electrode 22 of the single battery 10 forms an electrical connection with the first conductive region 3021 through contacting, and one of the corresponding positive electrode tab 2151 and negative electrode tab 2161 in the single battery 10 forms an electrical connection with the second conductive region 3022 through contacting. For example, the other of the second electrode 22 and the first electrode 21 of another adjacent single battery 10 forms an electrical connection with the first conductive region 3021 through contacting, and the other of the corresponding negative electrode tab 16 and positive electrode tab 2151 in the another single battery 10 forms an electrical connection with the second conductive region 3022 through contacting.

For example, referring to Fig. 4A and Fig. 5, one of the corresponding positive electrode tab 2151 and negative electrode tab 2161 in the single battery 10 means that, one of the first electrode 21 and the second electrode 22 of the single battery 10 connected with the bipolar plate 30 has the same polarity as that of one of the positive electrode tab 2151 and the negative electrode tab 2161, for example, in the case where the first electrode 21 of the single battery 10 is electrically connected with the first conductive region 3021 of the bipolar plate 30 through contacting, the positive electrode tab 2151 of the single battery 10 is electrically connected with the second conductive region 3022 of the bipolar plate 30 through contacting.

For example, referring to Fig. 4A and Fig. 5, the second conductive region 3022 of the bipolar plate 30 includes two portions electrically connected with each other, for example, in this scheme, the bipolar plate main body 301 may include a conductive material, so that the two portions of the second conductive region 3022 are electrically connected, but is not limited to this.

Of course, in some embodiments, the second conductive region of the bipolar plate may include only one conductive region, in which case the bipolar plate main body may be insulated, which may be specified set according to the design requirements, the embodiments of the present disclosure do not limit this.

Therefore, two adjacent single batteries 10 can be electrically connected through the first conductive region 3021 and the second conductive region 3022. Thus, the first conductive region 3021 and the second conductive region 3022 can act as conductive regions of the bipolar plate 30 which are independent and specific. For example, the structural forms of the first conductive region 3021 and the second conductive region 3022 may be similar to the first conductive portion 113 in the above embodiments, for details, please refer to the relevant descriptions in the above embodiments, which will not be repeated here.

By this arrangement, the connection between the first electrode 21 (or the second electrode 22) and the bipolar plate 30 can be more flexible, which facilitates the designing of the first conductive region 3021 and the second conductive region 3022 with a specific region according to different design requirements.

For example, referring to Fig. 4A and Fig. 5, the bipolar plate main body 301 may be connected with the first conductive region 3021 to be insulated from each other and sealed therebetween, and the bipolar plate main body 301 may be connected with the second conductive region 3022 to be insulated from each other and sealed therebetween. For example, an insulating material, such as a rubber ring, a plastic ring, or the like, may be provided between the bipolar plate main body 301 and the first conductive region 3021, which is not limited in the embodiments of the present disclosure. For example, the insulating material may further include polymethyl pentene, and the production process of the insulating material includes, but is not limited to, at least one of injection molding of embedded component, coating, sputtering, and 3D printing, but is not limited to this.

For example, referring to Fig. 4A and Fig. 5, the energy storage apparatus 03 may further include a fourth electronic isolating component (not illustrated in the figure) which is located in the receiving chamber corresponding to the intermediate single battery 102, and is configured to make that one of the first contacting region 2114 and the second contacting region 2214 electrically connected with the first conducting region 3021 of the intermediate single battery 102 is insulated from the bipolar plate main body 301, for example, also not be in contact with the second conducting region 3022. For example, the fourth electronic isolating component may be connected with the bipolar plate main body 301, or, the fourth electronic isolating component may be attached to the outer wall of the bipolar plate main body 301, the embodiments of the present disclosure do not limit the connection manner of the fourth electronic isolating component.

For example, referring to Fig. 4A and Fig. 5, the intermediate single battery 102A is taken as an example, the first contacting region 2114 of the positive current collector 211 is connected with the first conductive region 3021, a part of the surface of the positive current collector 211 facing the first conductive region 3021 is separated from the bipolar plate main body 301 of the bipolar plate 30 by the fourth electronic isolating component. For example, the arrangement of the fourth electronic isolating component can further make that the first contacting region 2114 is not in contact with the second conductive region 3022, which is conducive to making that one of the positive electrode tab 2151 and the negative electrode tab 2161 of the intermediate single battery 102A forms a good electrical connection with the second conductive region 3022 through contacting.

For example, referring to Fig. 4B and Fig. 5, in some embodiments, at least one bipolar plate 30 may include a bipolar plate main body 301 and a first conductive region 3021, one of the first electrode 21 and the second electrode 22 of the single battery 10, as well as one of the corresponding positive electrode tab 2151 and negative electrode tab 2161, are electrically connected with the first conductive region 3021 of the bipolar plate 30 through contacting; the other of the second electrode 22 and the first electrode 21 of another adjacent single battery 10 forms an electrical connection with the first conductive region 3021 through contacting, and the other of the corresponding negative electrode tab 2161 and positive electrode tab 2151 in the another adjacent single battery 10 forms an electrical connection with the first conductive region 3021 through contacting.

By this arrangement, the first conductive region 3021 can act as an independent conductive region of the bipolar plate 30 through which an electrical connection of the first electrode 21 and the second electrode 22 of adjacent single batteries 10 is achieved and an electrical connection of the positive electrode tab 2151 and the negative electrode tab 2161 of the adjacent single batteries 10 is achieved. The connection between the first electrode 21 (or the second electrode 22) and the bipolar plate 30 is more flexible, which facilitates to designing the first conductive region 3021 with a specific region according to different design requirements, for example, the form of the first conductive region 3021 may be similar to the first conductive portion 113 in the above embodiments, for details, please refer to descriptions in the above embodiments, which will not be repeated here.

For example, in some embodiments of the present disclosure, referring to Fig. 4A and Fig. 5, the bipolar plate 30 may include an insulating substrate and a conductive layer (not illustrated in Fig. 5) located on a surface at least on one side in the thickness direction of the insulating substrate, an internal conductor 115 is arranged within the insulating substrate, so as to form an electronic path between adjacent single batteries 10 through the conductive layer and the internal conductor 115 in the thickness direction of the insulating substrate. For example, the conductive layer is electrically connected with the internal conductor 115.

For example, in some embodiments of the present disclosure, referring to Fig. 4A and Fig. 5, the bipolar plate 30 may include an insulating substrate and conductive layers on surfaces on both sides of the insulating substrate in the thickness direction, that is, a first conductive layer and a second conductive layer (not illustrated in Fig. 5), the first conductive layer and the second conductive layer are located on surfaces on both sides of the insulating substrate in the thickness direction of the insulating substrate, and the insulating substrate is provided with an internal conductor 115, so as to form an electronic path with an adjacent single battery 10 along the first conductive layer, the internal conductor 115 and the second conductive layer in the thickness direction of the insulating substrate. For example, the insulating substrate may include a hole region, in which the internal conductor 115 can be filled, and the internal conductor 115 can be electrically connected with the first conductive layer and the second conductive layer located on both sides of the insulating substrate, respectively. Fig. 5 graphically shows the internal conductor 115 filled in the hole region. For example, the shape and the volume of the internal conductor 115 can be set according to the design requirements, the embodiments of the present disclosure do not limit this. For example, referring to Fig. 4A and Fig. 5, in two adjacent single batteries 10 located on either side of the bipolar plate 30, the first conductive layer of the bipolar plate 30 forms an electrical connection through contacting with one of the first electrode 21 and the second electrode 22, as well as one of the corresponding positive electrode tab 2151 and negative electrode tab 2161 of one single battery 10, the second conductive layer of the bipolar plate 30 is electrically connected through contacting with the other of the second electrode 22 and the first electrode 21, as well as the other of the corresponding negative electrode tab 2161 and the positive electrode tab 2151 of the other adjacent single battery 10.

For example, referring to Fig. 4A and Fig. 5, in the case where the first conductive layer of the bipolar plate 30 is connected through contacting with the first electrode 21 of the single battery 10, the positive electrode tab 2151 of the single battery 10 is also connected through contacting with the first conductive layer of the bipolar plate 30; in the case where the second conductive layer of the bipolar plate 30 is connected through contacting with the second electrode 22 of another single battery 10, the negative electrode tab 2161 of the another single battery 10 is also connected through contacting with the second electrode 22 of the another single battery 10.

For example, in some embodiments of the present disclosure, referring to Fig. 4A and Fig. 5, the bipolar plate 30 may further include an insulating substrate and a conductive layer (not illustrated in Fig. 5) on a surface on one side of the insulating substrate in the thickness direction, in two adjacent single batteries 10 located on two sides of one bipolar plate 30, the first conductive layer of the bipolar plate 30 forms an electrical connection through contacting with one of the first electrode 21 and the second electrode 22, as well as one of the corresponding positive electrode tab 2151 and negative electrode tab 2161 of one single battery 10, the internal conductor 115 of the bipolar plate 30 is electrically connected through contacting with the other of the second electrode 22 and the first electrode 21, as well as the other of the corresponding negative electrode tab 2161 and the positive electrode tab 2151 of another adjacent single battery 10. For example, the correspondence of the one of the first electrode 21 and the second electrode in the single battery 10 to the one of the positive electrode tab 2151 and the negative electrode tab 2161 can be referred to the relevant descriptions above in the above embodiments, which will not be repeated here.

With this arrangement, the bipolar plate 30 can have a flexible structural form according to the design requirements.

For example, referring to Fig. 4A and Fig. 5, the formation of the first conductive layer and the second conductive layer described above may include forming a conductive but less chemically active substance on an insulating substrate (for example, a plastic plate) by coating or sputtering. For example, at least one of, but not limited to, conductive graphite, graphene, carbon fiber, conductive carbon black, carbon nanotube, conductive polymer, oxide, titanium, nickel, aluminum, and copper may be coated or sputtered. For example, other metallic materials may also be coated or sputtered, the embodiments of the present disclosure do not limit this. For example, the internal conductor arranged in the bipolar plate 30 may be selected from at least one of conductive graphite, graphene, carbon fiber, conductive carbon black, carbon nanotube, conductive polymer, oxide, titanium, nickel, aluminum, and copper, or other metallic materials, the embodiments of the present disclosure do not limit this.

For example, in some embodiments of the present disclosure, referring to Fig. 1 and Fig. 2, the material of the bipolar plate 30 may include a conductive material. For example, the conductive material may include at least one of a metal material (thereby making the bipolar plate 30 a metal plate) and a carbon material, and make the adjacent single batteries 10 form an electronic path in the thickness direction of the bipolar plate 30. For example, one of the first electrode 21 and the second electrode 22 of the single battery 10 is connected with the bipolar plate 30 on one side, and the other of the second electrode 22 and the first electrode 21 of another adjacent single battery 10 is connected with the bipolar plate 30 on the other side, with this design method, the bipolar plate 30 has a simple structure, and its conductive effect is uniform and good.

For example, referring to Fig. 5, the battery cell 20 of the single battery 10 further includes an electronic isolating film 23 which is configured to achieve electronic insulation between the first electrode 21 and the second electrode 22. For example, the electronic isolating film 23 can include an insulating material. For example, the electronic isolating film 23 can include at least one of the polypropylene (PE), polypropylene (PP), and polyimide (PI), but is not limited to this. For example, the electronic isolating film 23 may be formed by coating an oxide ceramic on the surface of at least one of PE, PP, and PI, for example, the oxide ceramic may be at least one of aluminum oxide, titanium dioxide, zirconium dioxide, boehmite, or polymer microsphere, the embodiments of the present disclosure do not limit the specific form and material of the electronic isolating film 23.

For example, referring to Fig. 5, the first electrode 21, the electronic isolating film 23 and the second electrode 22 may be stacked and form a laminated battery cell, in which case the electronic isolating film 23 may include an integrated structure, and in the same laminated battery cell, the electronic isolating film 23 winds between the first electrode 21 and the second electrode 22 that are adjacent to each other, so that the first electrode 21 and the second electrode 22 are insulated from each other.

For example, referring to Fig. 2 and Fig. 3, in the same laminated battery cell, the electronic isolating film 23 may include a plurality of electronic isolating sub-films, and the electronic isolating sub-film is arranged between the first electrode 21 and the second electrode 22 that are adjacent to each other. For example, two adjacent electronic isolating sub-films can be arranged roughly in parallel, but not limited to this.

For example, in some embodiments of the present disclosure, the electronic isolating film may further include a plurality of electronic isolating sub-films and an integrated isolating sub-film (not illustrated in the figure, the structure of the electronic isolating sub-film and the integrated isolating sub-film may be referred to the relevant descriptions of the above embodiments). In the same laminated battery cell, the laminated battery cell includes a first part of battery cell and a second part of battery cell, the electronic isolating sub-film is located between the first electrode and the second electrode adjacent to each other in the first part of battery cell, and the integrated isolating sub-film winds between the first electrode and the second electrode of the second part of battery cell, that is, the electronic isolating film in the same laminated battery cell can include both an integrated isolating sub-film and an electronic isolating sub-film, so that the structure of the electronic isolating film can be more diversified, and can more flexibly adapt to the isolating requirements between the first electrode and the second electrode in the laminated battery cell. For example, for one laminated battery cell, the number of the integrated isolating sub-films can be multiple, which can be set according to the arrangement requirements, the embodiment of the present disclosure do not limit this.

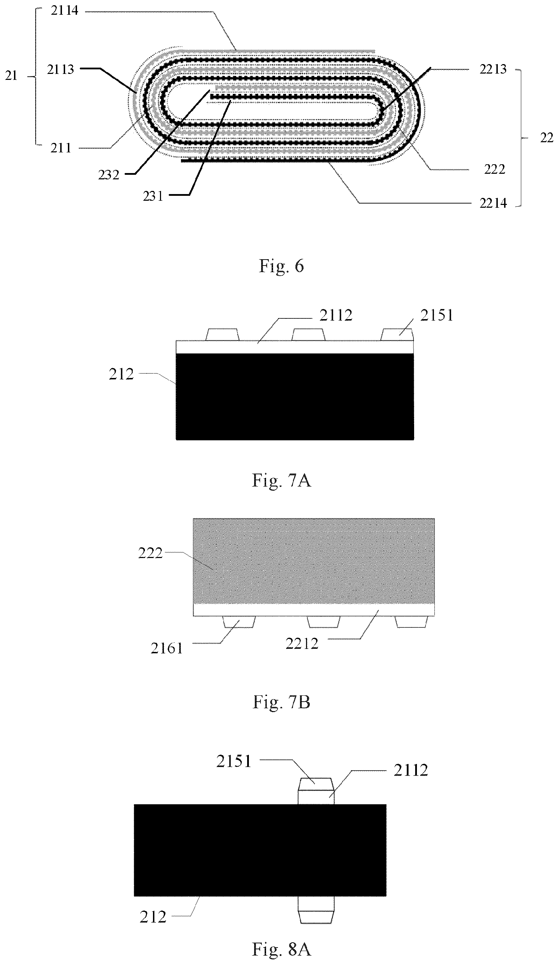

Fig. 6 is a cross-sectional view of a wound battery cell in the energy storage apparatus provided by at least one embodiment of the present disclosure.

For example, in some embodiments of the present disclosure, as illustrated in Fig. 6, the first electrode 21, the electronic isolating film 23, and the second electrode 22 may be wound to form a wound battery cell. At this point, the battery cell of the single battery 10 is a wound battery cell, and the electronic isolating film 23 includes an integrated first electronic isolating film 231 and an integrated second electronic isolating film 232, and the first electronic isolating film 231, the second electrode 22, the second electronic isolating film 232, and the first electrode 22 are stacked in sequence, and the first electronic isolating film 231 and the second electronic isolating film 232 wind between the first electrode 21 and the second electrode 22 that are adjacent to each other. For example, the first electronic isolating film 231 and the second electronic isolating film 232 may be made of the same insulating material and by the same process, but are not limited to this.

Fig. 7A to Fig. 13B are structural diagrams of electrode sheets in the energy storage apparatus provided by at least one embodiment of the present disclosure. For example, Fig. 7A, Fig. 8A, Fig. 9A, Fig. 10A, Fig. 11A, Fig. 12A, and Fig. 13A are positive electrode sheets arranged with positive electrode material 212 in different forms, and Fig. 7B, Fig. 8B, Fig. 9B, Fig. 10B, Fig. 11B, Fig. 12B, and Fig. 13B are negative electrode sheets arranged with negative electrode material 222 in different forms.

For example, as illustrated in Fig. 7A to Fig. 7B, the positive electrode material 212 of the first electrode is coated in the first coating region of the positive current collector, the negative electrode material 222 of the second electrode is coated in the second coating region of the negative current collector, the first connecting region 2112 is on one side of the positive electrode material 212, and the second connecting region 2212 is on one side of the negative electrode material 222. The plurality of positive electrode tabs 2151 are arranged at intervals, and each positive electrode tab 2151 protrudes from the edge of the first connecting region 2112 away from the positive electrode material 212. The plurality of negative electrode tabs 2161 are arranged at intervals, and each negative electrode tab 2161 protrudes from the edge of the second connecting region 2212 away from the negative electrode material 222. For example, the distance between adjacent positive electrode tabs 2151 and the distance between adjacent negative electrode tabs 2161 can be set according to design requirements. For example, the embodiments of the present disclosure do not limit the distance that each positive electrode tab 2151 protrudes from the edge of the first connecting region 2112 away from the positive electrode material 212, and the distance that each negative electrode tab 2161 protrudes from the edge of the second connecting region 2212 away from the negative electrode material 222.

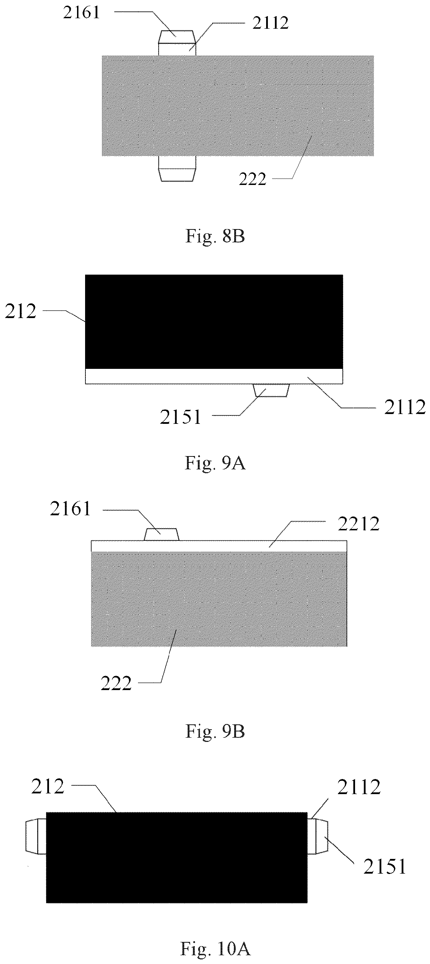

For example, compared to the structures of the electrode sheets illustrated in Fig. 7A to Fig. 7B, the size of the first connecting region 2112 of the first electrode illustrated in Fig. 8A to Fig. 8B that coincides with the edge of the first coating region is smaller than the size of the edge of the first coating region, and each of both sides of the first coating region are provided with one first connecting region 2112, and a positive electrode tab 2151 is provided on the side of each first connecting region 2112 away from the negative electrode material 222. Accordingly, the size of the second connecting region 2212 of the second electrode that coincides with the edge of the second coating region is smaller than the size of the edge of the second coating region, and each of both sides of the second coating region are provided with one second connecting region 2212, and a negative electrode tab 2161 is provided on the side of each second connecting region 2212 away from the negative electrode material 222. For example, the edge of the first connecting region 2112 that coincides with the first coating region may be the edge of the positive electrode sheet extending in the horizontal direction, and the size of the edge of the first coating region extending in the horizontal direction is greater than the size of the edge of the first coating region extending in the vertical direction. For example, the edge of the second connecting region 2212 that coincides with the second coating region may be the edge of the negative electrode sheet extending in the horizontal direction, and the size of the edge of the second coating region extending in the horizontal direction is greater than the size of the edge of the second coating region extending in the vertical direction.

For example, compared to the structures of the electrode sheets illustrated in Fig. 7A to Fig. 7B, the number of the positive electrode tab 2151 of the positive electrode sheet illustrated in Fig. 9A to Fig. 9B is one, and the positive electrode tab 2151 is located on the side of the first connecting region 2112 away from the positive electrode material 212; the number of the negative electrode tab 2161 of the negative electrode sheet is one, and the negative electrode tab 2161 is located on the side of the second connecting region 2212 away from the negative electrode material 222.

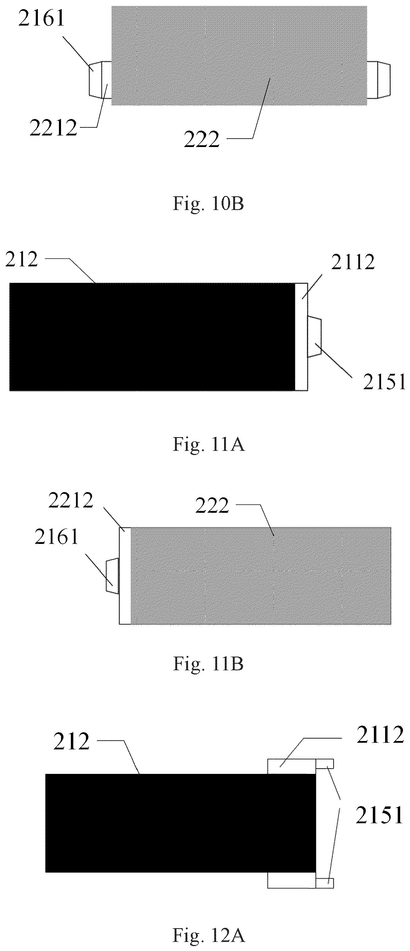

For example, compared to the structures of the electrode sheets as illustrated in Fig. 8A to Fig. 8B, the edge of the first connecting region 2112 of the positive electrode sheet as illustrated in Fig. 10A to Fig. 10B that coincides with the first coating region may be the edge extending in the vertical direction of the positive electrode sheet, and the size of the edge of the first coating region extending in the horizontal direction is greater than the size of the edge of the first coating region extending in the vertical direction. For example, the edge of the second connecting region 2212 that coincides with the second coating region may be the edge of the negative electrode sheet extending in the vertical direction, and the size of the edge of the second coating region extending in the horizontal direction is greater than the size of the edge of the second coating region extending in the vertical direction, other characteristics can refer to the relevant descriptions of Fig. 8A to Fig. 8B in the above embodiments, which will not be repeated here.

For example, compared to the structures of the electrode sheet illustrated in Fig. 10A to Fig. 10B, the size of the edge of the first connecting region 2112 of the positive electrode sheet illustrated in Fig. 11A to Fig. 11B that coincides with the first coating region is basically equal to the extension length of the edge, the size of the edge of the second connecting region 2212 of the negative electrode sheet that coincides with the second coating region is basically equal to the extension length of the edge.

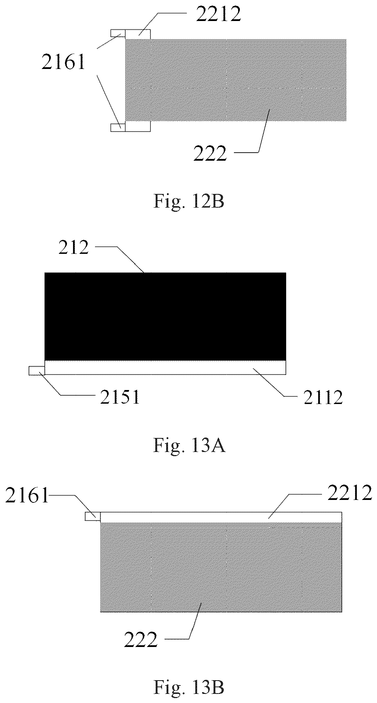

For example, referring to Fig. 12A and Fig. 12B, the positive electrode tab 2151 of the positive electrode sheet and the negative electrode tab 2161 of the negative electrode sheet are similarto "sheets", for example, may be a structure with a shape of "knife", but not limited to this.

For example, as illustrated in Fig. 12A and Fig. 12B, one edge of the first connecting region 2112 is flush with an edge of the positive electrode material 212, and the positive electrode tab 2151 protrudes from the edge of the first connecting region 2112, the size of the edge of the first connecting region 2112 that coincides with the positive electrode material 212 is smaller than the size of the edge of the positive electrode material 212 that corresponds to the edge of the first connecting region 2112, and each of opposite sides of the positive electrode material 212 is provided with a first connecting region 2112. One edge of the second connecting region 2212 is flush with an edge of the negative electrode material 222, and the negative electrode tab 2161 protrudes from the edge of the second connecting region 2212, and the size of the edge of the second connecting region 2212 that coincides with the negative electrode material 222 is less than the size of the edge of the negative electrode material 222 that corresponds to the edge of the second connecting region 2212, each of opposite sides of the negative electrode material 222 is provided with a second connecting region 2212. For example, the positive electrode sheet and the negative electrode sheet illustrated in Fig. 12A and Fig. 12B may correspond to the single battery illustrated in Fig. 3, and a plurality of positive electrode sheets and a plurality of negative electrode sheets are arranged in sequence to form a laminated battery cell, but not limited to this.

For example, as illustrated in Fig. 13A and Fig. 13B, one edge of the first connecting region 2112 is flush with an edge of the positive electrode material 212, and the positive electrode tab 2151 protrudes from the edge of the first connecting region 2112, the size of the edge of the first connecting region 2112 that coincides with the positive electrode material 212 is basically equal to the size of the edge of the positive material electrode 212 that corresponds to the edge of the first connecting region 2112, and a first connecting region 2112 is provided on one side of the positive electrode material 212. One edge of the second connecting region 2212 is flush with an edge of the negative electrode material 222, and the negative electrode tab 2161 protrudes from the edge of the second connecting region 2212, and the size of the edge of the second connecting region 2212 that coincides with the negative electrode material 222 is basically equal to the size of the edge of the negative electrode material 222 that corresponds to the edge of the second connecting region 2212, one side of the negative electrode material 222 is provided with a second connecting region 2212.

For example, for the various electrode sheet structures described in the above embodiments, during the formation of the battery cell, the positive electrode sheet is stacked with the negative electrode sheet, which requires that the positive electrode tab 2151 of the positive electrode sheet be staggered from the negative electrode tab 2161 of the negative electrode sheet to reduce the risk of short circuit.

For example, referring to Fig. 4A and Fig. 5, the energy storage apparatus 03 may further include a liquid injection hole 70 and a safety valve (not illustrated in the figure). For example, for each single battery 10, the liquid injection hole 70 may be arranged in the housing component 11 and configured to allow the electrolyte injected into the receiving chamber 12 to pass through, the embodiments of the present disclosure do not limit the shape and size of the liquid injection hole 70. For example, the safety valve of the energy storage apparatus 03 may also be arranged on the housing component 11 corresponding to each single battery 10 and configured to release the pressure in the chamber of the energy storage apparatus 02, but is not limited to this.

The energy storage apparatus provided by at least one embodiment of the present disclosure can replace the battery in a traditional battery pack scheme and omit components such as the bus bar required for connection between batteries, thereby increasing the energy density of the energy storage apparatus; at the same time, the battery module in the traditional battery pack scheme can be directly replaced, the series and parallel connection of the single batteries can be completed inside the energy storage apparatus, and the usage of connecting components can be reduced, so that the volume utilization rate and the energy density of the battery pack can be improved.

The following statements should be noted.
(1) The accompanying drawings involve only the structure(s) in connection with the embodiment(s) of the present disclosure, and other structure(s) can be referred to common design(s).
(2) In case of no conflict, features(s) in the same embodiment and in different embodiments may be combined with each other.

The above are merely specific implementations of the present disclosure without limiting the protection scope of the present disclosure thereto. The protection scope of the present disclosure should be based on the protection scope of the appended claims.

## Claims

1. An energy storage apparatus, comprising:
a plurality of single batteries, each of the plurality of single batteries comprising a battery cell, the battery cell comprising a first electrode and a second electrode with opposite polarities and being insulated from each other;
a bipolar plate, arranged between two adjacent single batteries, wherein the first electrode or the second electrode of one of the adjacent single batteries forms an electrical connection with the bipolar plate through contacting, and the second electrode or the first electrode of the other of the adjacent single batteries forms an electrical connection with the bipolar plate through contacting; and
a housing assembly, comprising a plurality of housing components corresponding to the plurality of single batteries,
wherein one of the first electrode and the second electrode comprises a positive current collector and a positive electrode material, and the other of the first electrode and the second electrode comprises a negative current collector and a negative electrode material;
the positive current collector comprises a first contacting region, and the negative current collector comprises a second contacting region, in a same one of the plurality of single batteries, the first contacting region is configured to form an electrical connection with one of the housing component and the bipolar plate corresponding to the same single battery through contacting, the second contacting region is configured to form an electrical connection with the other of the bipolar plate and the housing component corresponding to the same single battery through contacting; or,
in the same single battery, the first contacting region and the second contacting region are configured to form electrical connection with bipolar plates located on both sides of the same single battery respectively through contacting, and neither the first contacting region nor the second contacting region is provided with the positive electrode material or the negative electrode material.

2. The energy storage apparatus according to claim 1, wherein the bipolar plate is connected with the housing components corresponding to the two adjacent single batteries to be insulated from each other and sealed therebetween so as to form receiving chambers; the battery cell is located in each of the receiving chambers, and the bipolar plate acts as a partition plate of an ion path between the receiving chambers corresponding to the two adjacent single batteries.

3. The energy storage apparatus according to claim 1 or 2, wherein a contacting area between the first contacting region and the housing component corresponding to the single battery or a contacting area between the first contacting region and the bipolar plate corresponding to the single battery is greater than or equal to 9mm²; and/or
a contacting area between the second contacting region and the housing component corresponding to the single battery or a contacting area between the second contacting region and the bipolar plate corresponding to the single battery is greater than or equal to 9mm².

4. The energy storage apparatus according to any one of claims 1-3, wherein in the same single battery, the first contacting region is a surface of the positive current collector at a side close to the housing component or the bipolar plate, and the second contacting region is a surface of the negative current collector at a side close to the bipolar plate or the housing side;
or, in the same single battery, the first contacting region is a surface of the positive current collector close to the bipolar plate on one side of the same single battery, and the second contacting region is a surface of the negative current collector close to the bipolar plate on the other side of the same single battery.

5. The energy storage apparatus according to any one of the claims 1-4, wherein the positive current collector further comprises a first coating region, and the positive electrode material is coated in the first coating region;
the negative current collector further comprises a second coating region, and the negative electrode material is coated in the second coating region,
preferably, at least a part of the first coating region is located on a surface of the positive current collector at a side opposite to the first contacting region, and/or
at least a part of the second coating region is located on a surface of the negative current collector at a side opposite to the second contacting region.

6. The energy storage apparatus according to any one of the claims 1-5, wherein the positive current collector further comprises a plurality of first connecting regions, the negative current collector further comprises a plurality of second connecting regions, in the same single battery, the plurality of first connecting regions of the positive current collector are electrically connected, the plurality of second connecting regions of the negative current collector are electrically connected.

7. The energy storage apparatus according to claim 2, wherein the plurality of single batteries comprise two end single batteries, in a same one of the two end single batteries, the first electrode and the second electrode of the end single battery are configured to form electrical connection with the housing component and the bipolar plate corresponding to the end single battery through contacting, respectively; and the housing components corresponding to the two end single batteries act as power supply output electrodes of the energy storage apparatus, respectively,
preferably, one of the first electrode and the second electrode in one end single battery of the two end single batteries is configured to form an electrical connection with the housing component corresponding to the end single battery through contacting; the other of the second electrode and the first electrode in the other end single battery of the two end single batteries is configured to form an electrical connection with the housing component corresponding to the other end single battery through contacting.

8. The energy storage apparatus according to claim 7, wherein the positive current collector further comprises at least one positive electrode tab group and the negative current collector further comprises at least one negative electrode tab group,
each of the at least one positive electrode tab group comprises at least one positive electrode tab and each of the at least one negative electrode tab group comprises at least one negative electrode tab;
in the same single battery, at least one positive electrode tab of the positive electrode tab group is electrically connected with one of the housing component and the bipolar plate that is electrically connected with and corresponds to the first contacting region, and at least one negative electrode tab of the negative electrode tab group is electrically connected with the other one of the bipolar plate and the housing component that is electrically connected with and corresponds to the second contacting region;
or, at least one positive electrode tab of the positive electrode tab group is electrically connected with the bipolar plate that is electrically connected with and corresponds to the first contacting region, and at least one negative electrode tab of the negative electrode tab group is electrically connected with the bipolar plate that is electrically connected with and corresponds to the second contacting region.

9. The energy storage apparatus according to any one of claims 1-8, wherein the positive current collector further comprises at least one positive electrode tab group and the negative current collector further comprises at least one negative electrode tab group,
each of the at least one positive electrode tab group comprises at least one positive electrode tab and each of the at least one negative electrode tab group comprises at least one negative electrode tab;
in the same single battery, at least one positive electrode tab of the positive electrode tab group is electrically connected with one of the housing component and the bipolar plate corresponding to and electrically connected with the first contacting region, and at least one negative electrode tab of the negative electrode tab group is electrically connected with the other one of the bipolar plate and the housing component corresponding to and electrically connected with the second contacting region;
or, at least one positive electrode tab of the positive electrode tab group is electrically connected with the bipolar plate corresponding to and electrically connected with the first contacting region, and at least one negative electrode tab of the negative electrode tab group is electrically connected with the bipolar plate corresponding to and electrically connected with the second contacting region,
the first contacting region and the at least one positive electrode tab are connected at different positions of the housing component, respectively, or connected at different positions of the bipolar plate, respectively; the second contacting region and the at least one negative electrode tab are connected at different positions of the housing component, respectively, or connected at different positions of the bipolar plate, respectively.

10. The energy storage apparatus according to any one of claims 8-9, wherein the housing component corresponding to the end single battery is a conductor; in the same end single battery, the at least one positive electrode tab and the first contacting region are electrically connected with a side wall of the housing component corresponding to the end single battery, and the at least one negative electrode tab and the second contacting region are electrically connected with the bipolar plate corresponding to the end single battery; or
the at least one negative electrode tab and the second contacting region are electrically connected with the side wall of the housing component corresponding to the end single battery, and the at least one positive electrode tab and the first contacting region are electrically connected with the bipolar plate corresponding to the end single battery.

11. The energy storage apparatus according to any one of claims 8-10, wherein the housing component corresponding to the end single battery comprises a first main body portion, a first hole region in the first main body portion, and a first conductive portion arranged in the first hole region and connected with the first main body portion to be insulated from each other and sealed therebetween, one of the first electrode and the second electrode of the end single battery forms an electrical connection with the first conductive portion through contacting;
the first main body portion is connected with the bipolar plate to be insulated from each other and sealed therebetween, and the other one of the first electrode and the second electrode of the end single battery forms an electrical connection with the bipolar plate through contacting,
preferably, the housing component corresponding to the end single battery further comprises a second conductive portion, and at least one positive electrode tab or at least one negative electrode tab of the end single battery is electrically connected with the housing component through the second conductive portion;
in the same end single battery, the second conductive portion and the first conductive portion are located on the side wall of the housing component corresponding to the end single battery.

12. The energy storage apparatus according to any one of claims 7-8, wherein
the plurality of single batteries further comprise at least one intermediate single battery located between the two end single batteries,
in a same one of the plurality of intermediate single batteries, the first electrode and the second electrode are configured to form electrical connection with the bipolar plates located on two sides of the intermediate single battery through contacting, respectively.

13. The energy storage apparatus according to any one of claims 8-11, wherein at least one bipolar plate comprises a bipolar plate main body, a first conductive region, and a second conductive region,
one of the first electrode and the second electrode of the single battery forms an electrical connection with the first conductive region through contacting, and one of the corresponding positive electrode tab and negative electrode tab in the single battery forms an electrical connection with the second conductive region through contacting;
the other of the second electrode and the first electrode of another adjacent single battery forms an electrical connection with the first conductive region through contacting, and the other of the corresponding negative electrode tab and positive electrode tab in the another adjacent single battery forms an electrical connection with the second conductive region through contacting.

14. The energy storage apparatus according to any one of claims 8-11 and 13, wherein at least one bipolar plate comprises a bipolar plate main body and a first conductive region,
one of the first electrode and the second electrode of the single battery, and one of the corresponding positive electrode tab and the negative electrode tab form electrical connection with the first conductive region of the bipolar plate through contacting, respectively;
the other of the second electrode and the first electrode of another adjacent single battery forms an electrical connection with the first conductive region through contacting, and the other of the corresponding negative electrode tab and the positive electrode tab in the another adjacent single battery forms an electrical connection with the first conductive region through contacting.

15. The energy storage apparatus according to any one of claims 8-11 and 13-14, wherein the bipolar plate comprises an insulating substrate and a conductive layer on a surface located on at least one side in a thickness direction of the insulating substrate, the insulating substrate is provided with an internal conductor, the conductive layer is electrically connected with the internal conductor, so that adjacent single batteries form an electronic path through the conductive layer and the internal conductor in the thickness direction of the insulating substrate.

16. The energy storage apparatus according to any one of claims 1-15, wherein a material of the bipolar plate comprises a conductive material, so that adjacent single batteries form an electronic path in a thickness direction of the bipolar plate.

17. The energy storage apparatus according to any one of claims 2, 7-8, and 10-15, further comprising an insulating structure, wherein the insulating structure is arranged between the housing component and the bipolar plate corresponding to the single battery and between the housing components corresponding to the two adjacent single batteries, so as to realize electronic insulation between the housing component and the bipolar plate corresponding to the single battery, and realize electronic insulation between the housing components corresponding to the two adjacent single batteries.

18. The energy storage apparatus according to any one of claims 2, 7-8, and 10-15, further comprising a first electronic isolating component, wherein the first electronic isolating component is located in the receiving chamber, and the first electronic isolating component is configured to insulate the first electrode of the single battery from the housing component or the bipolar plate electrically connected with the second electrode,
preferably, the energy storage apparatus further comprises a second electronic isolating component, the second electronic isolating component is located in the receiving chamber, and the second electronic isolating component is configured to insulate the second electrode of the single battery from the housing component or the bipolar plate electrically connected with the first electrode.

19. The energy storage apparatus according to claim 11, further comprising a third electronic isolating component, wherein the third electronic isolating component is located in the receiving chamber corresponding to the end single battery, and is configured to allow one of the first contacting region and the second contacting region electrically connected with the first conductive portion of the end single battery to be not in contact with the first main body portion and/or the second conductive portion.

20. The energy storage apparatus according to claim 13, further comprising a fourth electronic isolating component, wherein the plurality of single batteries further comprise at least one intermediate single battery located between the two end single batteries,
the fourth electronic isolating component is located in the receiving chamber corresponding to the intermediate single battery, and is configured to allow one of the first contacting region and the second contacting region electrically connected with the first conductive region of the intermediate single battery to be insulated from the bipolar plate main body and/or to be not in contact with the second conductive region.
